(19) Europäisches Patentamt
European Patent Office
Office européen des brevets

(11) EP 2 550 325 B1

(12) **EUROPEAN PATENT SPECIFICATION**

(45) Date of publication and mention of the grant of the patent:
**17.08.2016 Bulletin 2016/33**

(21) Application number: **11708824.5**

(22) Date of filing: **14.03.2011**

(51) Int Cl.:
***C08L 23/10*** *(2006.01)* ***C08L 23/12*** *(2006.01)*
***F16L 9/12*** *(2006.01)* ***C08F 297/08*** *(2006.01)*

(86) International application number:
**PCT/EP2011/053806**

(87) International publication number:
**WO 2011/117102 (29.09.2011 Gazette 2011/39)**

(54) **Stiff and tough polypropylene compound**

Feste und zähe Polypropylenzusammensetzung

Composition de polypropylène rigide et dur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2010 EP 10157225**

(43) Date of publication of application:
**30.01.2013 Bulletin 2013/05**

(60) Divisional application:
**15193192.0 / 3 006 500**

(73) Proprietor: **Borealis AG**
**1220 Vienna (AT)**

(72) Inventors:
- **DOSHEV, Petar**
  **A-4020 Linz (AT)**
- **LIU, Yi**
  **4209 Engerwitzdorf (AT)**
- **MALM, Bo**
  **FI-02110 Espoo (FI)**
- **SCHIESSER, Stefan**
  **A-4030 Linz (AT)**
- **SUNDHOLM, Tua**
  **A-4020 Linz (AT)**

(74) Representative: **Lux, Berthold**
**Maiwald Patentanwalts GmbH**
**Elisenhof**
**Elisenstraße 3**
**80335 München (DE)**

(56) References cited:
**EP-A1- 1 632 529** **WO-A2-2006/114358**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 550 325 B1

Printed by Jouve, 75001 PARIS (FR)

## Description

The present invention is directed to a new heterophasic polypropylene (HECO), its manufacture and use.
Heterophasic propylene copolymers are well known in the art. Such heterophasic propylene copolymers comprise a matrix being either a propylene homopolymer or a random propylene copolymer in which an elastomeric copolymer is dispersed. Thus the polypropylene matrix contains (finely) dispersed inclusions being not part of the matrix and said inclusions contain the elastomeric copolymer. The term inclusion indicates that the matrix and the inclusion form different phases within the heterophasic propylene copolymer, said inclusions are for instance visible by high resolution microscopy, like electron microscopy or scanning force microscopy.
With heterophasic polypropylenes it is possible to create material having rather high rigidity and good impact behavior. Such material is for instance used in the field of pipes which must withstand high pressure on the one hand and shock resistance on the other hand.
However nowadays customers require tailored materials achieving high performance for specific applications. Accordingly there is for instance the desire in pipe industry to have polypropylene material available with exceptional high stiffness without losing impact.
Therefore the object of the present invention is to provide a polymer material suitable in pipe industry having excellent stiffness/impact balance.
The finding of the present invention is that the material must be a heterophasic polypropylene with a very broad molecular weight distribution in which a mineral filler of not more than 30.0 wt.-% is dispersed.
Therefore the present invention is directed to a heterophasic polypropylene composition (HECO) comprising

(a) a matrix (M) being a polypropylene (PP),
(b) an elastomeric propylene copolymer (EC), and
(c) mineral filler (F),

wherein

(i) said heterophasic polypropylene composition (HECO)

($\alpha$) without mineral filler (F), preferably without any additive, has a melt flow rate $MFR_2$ (230 °C) measured according to ISO 1133 of equal or below 1.5 g/10min, preferably equal below 1.0 g/10min,
and/or
($\beta$) with mineral filler (F) has a melt flow rate $MFR_2$ (230 °C) measured according to ISO 1133 of equal or below 2.0 g/10min, preferably equal below 1.5 g/10min,

(ii) said heterophasic polypropylene composition (HECO) has a polydispersity index (PI) of at least 5.0,
(iii) the amount of the amorphous fraction (AM) of the xylene cold soluble (XCS) fraction of the heterophasic polypropylene composition (HECO) is at least 5.0 wt%, and
(iv) the amount of mineral filler (F) within said heterophasic polypropylene composition (HECO) is in the range of 5.0 to equal or below 30.0 wt.-%.

Preferably the elastomeric propylene copolymer (EC) and optionally the mineral filler (F) are dispersed in the matrix (M).
It has been surprisingly found that the heterophasic polypropylene composition (HECO) is featured by very high stiffness without compromising the impact behavior (see examples).
In the following the invention is described in more detail.
The amount for the xylene cold soluble (XCS) content, for the amorphous fraction (AM), and for the comonomer content of the HECO given in the patent application refer to the heterophasic polypropylene composition (HECO) without the mineral filler (F), preferably without any additive, unless otherwise indicated.
A heterophasic polypropylene composition (HECO) according to this invention comprises a polypropylene (PP) as a matrix (M) and dispersed therein an elastomeric propylene copolymer (EC). Thus the polypropylene (PP) matrix contains (finely) dispersed inclusions being not part of the matrix (M) and said inclusions contain the elastomeric propylene copolymer (EC). The term inclusion indicates that the matrix (M) and the inclusion form different phases within the heterophasic propylene copolymer (HECO), said inclusions are for instance visible by high resolution microscopy, like electron microscopy or scanning force microscopy. Also the mineral filler (F) is preferably dispersed in the matrix (M).
Preferably the heterophasic polypropylene composition (HECO) according to this invention comprises as polymer components only the polypropylene (PP) and the elastomeric propylene copolymer (EC). In other words the heterophasic polypropylene composition (HECO) contain further additives, in particular the mineral filler (F), but no other

polymer in an amount exceeding 5 wt-%, more preferably exceeding 3 wt.-%, like exceeding 1 wt.-%, based on the total heterophasic polypropylene composition (HECO). One additional polymer which may be present in such low amounts is a polyethylene which is a by-reaction product obtained by the preparation of heterophasic polypropylene composition (HECO) (see in detail below). Accordingly it is in particular appreciated that the instant heterophasic polypropylene composition (HECO) contains as polymer components only the polypropylene (PP) matrix, the elastomeric propylene copolymer (EC) and optionally polyethylene in amounts as mentioned in this paragraph.

One essential finding of the present invention is that the heterophasic polypropylene composition (HECO) has a rather low melt flow rate. The melt flow rate mainly depends on the weight average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined die under specified temperature and pressure conditions and the measure of viscosity of the polymer which, in turn, for each type of polymer is mainly influenced by its molecular weight but also by its degree of branching. The melt flow rate measured under a load of 2.16 kg at 230 °C (ISO 1133) is denoted as $MFR_2$ (230 °C). Accordingly, it is preferred that in the present invention the heterophasic polypropylene composition (HECO) (without additives, in particular without mineral filler (F)) has an $MFR_2$ (230 °C) of equal or below 1.0 g/10min, more preferably of equal or below 0.8 g/10 min, still more preferably in the range of 0.05 to 1.0 g/10min, yet more preferably in the range of 0.08 to 0.8 g/10min. In case the melt flow rate $MFR_2$ (230 °C) of the heterophasic polypropylene composition (HECO) is measured with additives, in particular with the mineral filler (F), slightly different values are obtained. Accordingly it is preferred that in the present invention the heterophasic polypropylene composition (HECO) (with additives, in particular with mineral filler (F)) has an $MFR_2$ (230 °C) of equal or below 2.0 g/10min, more preferably of equal or below 1.5 g/10 min, still more preferably in the range of 0.05 to 2.0 g/10min, yet more preferably in the range of 0.1 to 1.5 g/10min.

Alternatively or additionally the heterophasic polypropylene composition (HECO) is defined by its crossover frequency $\omega_c$ (a parameter corresponding to the weight average molecular weight), said crossover frequency $\omega_c$ is the frequency at which the storage modulus G' and the loss modulus G" determined in a dynamic-mechanical rheology test are identical and defined as crossover modulus $G_c$. Thus it is appreciated that the heterophasic polypropylene composition (HECO) has a crossover frequency $\omega_c$ as determined by dynamic rheology according to ISO 6271-10 at 200°C of equal or below 3.0 rad/s, preferably equal or below 2.5 rad/s, like equal or below 2.0 rad/s.

Further it is appreciated that the heterophasic polypropylene composition (HECO) is featured by a broad molecular weight distribution. As outlined above the heterophasic polypropylene composition (HECO) shall be suitable as pipe material. Thus the final heterophasic polypropylene composition (HECO) must fulfill the demands of the pipe industry, however on the other hand it must be also economically processable. With a heterophasic polypropylene composition (HECO) according to this invention which is featured by a broad molecular weight distribution both requirements can be met. Accordingly it is required that the heterophasic polypropylene composition (HECO) has a polydispersity index (PI), defined as $10^5/G_c$ with $G_c$ being the crossover modulus from dynamic rheology according to ISO 6271-10 at 200°C, of at least 5.0, more preferably of at least 5.3, yet more preferably in the range of 5.0 to 15.0, still more preferably in the range of 5.3 to 12.0, like 5.5 to 11.0.

Alternatively or additionally the heterophasic polypropylene composition (HECO) has a shear thinning index SHI (3/100) measured according to ISO 6271-10 at 200 °C of at least 20, more preferably of at least 25, yet more preferably in the range of 20 to 80, still more preferably in the range of 25 to 75.

Preferably it is desired that the heterophasic polypropylene composition (HECO) is thermomechanically stable. Accordingly it is appreciated that the heterophasic polypropylene composition (HECO) without mineral filler (F), preferably without any additives, has a melting temperature of at least 160 °C, more preferably of at least 164 °C, still more preferably in the range of 160 to 170 °C.

Additionally it is preferred that the crystallization temperature of the heterophasic polypropylene composition (HECO) without mineral filler (F), preferably without any additives,is at least 122 °C, more preferably at least 125 °C, still more preferably in the range of 125 to 135 °C.

The heterophasic polypropylene composition (HECO) comprises apart from propylene also comonomers. Preferably the heterophasic polypropylene composition (HECO) comprises apart from propylene ethylene and/or $C_4$ to $C_{12}$ $\alpha$-olefins. Accordingly the term "propylene copolymer" according to this invention is understood as a polypropylene comprising, preferably consisting of, units derivable from

(a) propylene
and
(b) ethylene and/or $C_4$ to $C_{12}$ $\alpha$-olefins.

Thus a propylene copolymer according to this invention comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene.

Preferably the propylene copolymers according to this invention comprise, especially consist of, monomers copolymerizable with propylene from the group consisting of ethylene, 1-butene and 1-hexene. More specifically the propylene copolymers of this invention comprise - apart from propylene - units derivable from ethylene and/or 1-butene. In a preferred embodiment the propylene copolymers according to this invention comprise units derivable from ethylene and propylene only. Still more preferably the random propylene copolymer (R-PP) as well as the elastomeric propylene copolymer (EC) contain the same comonomers, like ethylene.

Accordingly, in a preferred embodiment the elastomeric propylene copolymer (EC) is a ethylene propylene rubber (EPR).

Additionally it is appreciated that the heterophasic polypropylene composition (HECO) without mineral filler (F), preferably without any additives, has preferably a total comonomer content below 8.0 wt.-%, more preferably below 6.0 wt.-%, yet more preferably in the range of 1.5 to 8.0 wt.-%, still more preferably in the range of 2.0 to 6.0 wt.-%.

The xylene cold soluble (XCS) fraction measured according to ISO6427 (23 °C) of the heterophasic polypropylene composition (HECO) without mineral filler (F), preferably without any additives, is preferably below 15.0 wt.-%, more preferably in the range of 4.0 to 15.0 wt.-%, like in the range of 5.0 to 12.0 wt.-%.

The heterophasic polypropylene composition (HECO) is in particular defined by the matrix (M) and the elastomeric propylene copolymer (EC) dispersed therein. Accordingly both components are now defined in more detail.

The matrix (M) is a polypropylene (PP), more preferably a random propylene copolymer (R-PP) or a propylene homopolymer (H-PP), the latter especially preferred.

Accordingly the comonomer content of the polypropylene (PP) is not more than 1.0 wt.-%, yet more preferably not more than 0.8 wt.-%, still more preferably not more than 0.5 wt.-%.

As mentioned above the polypropylene (PP) is preferably a propylene homopolymer (H-PP).

The expression propylene homopolymer as used throughout the instant invention relates to a polypropylene that consists substantially, i.e. of more than 99.8 wt.-%, of propylene units. In a preferred embodiment only propylene units in the propylene homopolymer are detectable. The comonomer content can be determined with FT infrared spectroscopy, as described below in the example section.

In case the polypropylene (PP) is a random propylene copolymer (R-PP) it is appreciated that the random propylene copolymer (R-PP) comprises monomers copolymerizable with propylene, for example comonomers such as ethylene and/or $C_4$ to $C_{12}$ $\alpha$-olefins, in particular ethylene and/or $C_4$ to $C_8$ $\alpha$-olefins, e.g. 1-butene and/or 1-hexene. Preferably the random propylene copolymer (R-PP) according to this invention comprises, especially consists of, monomers copolymerizable with propylene from the group consisting of ethylene, 1-butene and 1-hexene. More specifically the random propylene copolymer (R-PP) of this invention comprises - apart from propylene - units derivable from ethylene and/or 1-butene. In a preferred embodiment the random propylene copolymer (R-PP) comprises units derivable from ethylene and propylene only.

Additionally it is appreciated that the random propylene copolymer (R-PP) has preferably a comonomer content in the range of more than 0.2 to 1.0 wt.-%, more preferably in the range of more than 0.2 to 0.8 wt.-%, yet more preferably in the range of 0.2 to 0.7 wt.-%.

The term "random" indicates that the comonomers of the propylene copolymer (R-PP), as well as of the first random propylene copolymer (R-PP1), the second random propylene copolymer (R-PP2), and third random propylene copolymer (R-PP3), are randomly distributed within the propylene copolymers. The term random is understood according to IUPAC (Glossary of basic terms in polymer science; IUPAC recommendations 1996).

Further the polypropylene (PP) is featured by a broad molecular weight distribution. Accordingly the polypropylene (PP) has a polydispersity index (PI), defined as $10^5/G_c$ with $G_c$ being the crossover modulus as defined before, of at least 4.5, more preferably of at least 5.0, yet more preferably in the range of 4.5 to 15.0, still more preferably in the range of 5.0 to 12.0, like 5.5 to 11.0.

Additionally or alternatively the polypropylene (PP) has a shear thinning index SHI (3/100) measured by dynamic rheology according to ISO 6271-10 at 200 °C of at least 20, more preferably of at least 25, yet more preferably in the range of 20 to 80, still more preferably in the range of 25 to 75.

As stated above the heterophasic polypropylene composition (HECO) has a rather low melt flow rate. Accordingly, the same holds true for its matrix (M), i.e. the polypropylene (PP). Thus it is preferred that polypropylene (PP) has an $MFR_2$ (230 °C) of equal or below 1.2 g/10min, more preferably of equal or below 1.0 g/10 min, still more preferably in the range of 0.05 to 1.2 g/10min, yet more preferably in the range of 0.1 to 1.0 g/10min.

Alternatively or additionally the polypropylene (PP) is defined by a high molecular weight. Thus it appreciated that the polypropylene (PP) has a weight average molecular weight (Mw) measured by gel permeation chromatography (GPC; ISO 16014-4:2003) of at least 500 kg/mol, more preferably of at least 600 kg/mol, yet more preferably in the range of 500 to 10,000 kg/mol, still more preferably in the range of 600 to 5,000 kg/mol.

Further the polypropylene (PP) can be defined by the crossover frequency $\omega_c$. Thus it is appreciated that the the polypropylene (PP) has a crossover frequency $\omega_c$ as determined by dynamic rheology according to ISO 6271-10 at 200°C of equal or below 3.0 rad/s, preferably equal or below 2.5 rad/s.

The xylene cold soluble (XCS) content of the polypropylene (PP) is rather moderate. Accordingly xylene cold soluble (XCS) content measured according to ISO 6427 (23 °C) is preferably equal or below 2.0 wt.-%, more preferably equal or below 1.8 wt.-%, still more preferably in the range of 0.5 to 2.0 wt.-%, like in the range of 0.8 to 1.8 wt.-%.

The matrix (M), i.e. the polypropylene (PP) can be further defined by its crystalline fractions determined by the stepwise isothermal segregation technique (SIST). The stepwise isothermal segregation technique (SIST) provides a possibility to determine the lamella thickness distribution. The precise measuring method is specified in the example section. Thereby rather high amounts of polymer fractions crystallizing at high temperatures indicate a rather high amount of thick lamellae. Thus it is appreciated that the polypropylene (PP) comprises at least 25.0 wt-%, more preferably at least 30.0 wt.-%, yet more preferably at least 35.0 wt.-%, still yet more preferably at least 40.0 wt.-%, of a crystalline fraction having a lamella thickness of at least 24.2 nm, preferably of 24.2 to 84.6 nm, wherein said fraction is determined by the stepwise isothermal segregation technique (SIST).

As stated above the polypropylene (PP) is featured by a broad molecular weight distribution. This broad molecular weight distribution is preferably achieved by three polypropylene fractions within the polypropylene (PP), said polypropylene fractions differ in the average molecular weight.

Accordingly the polypropylene (PP) preferably comprises at least two, more preferably comprises two or three, yet more preferably consists of two or three, polypropylene fractions, the two or three polypropylene fractions differ from each other by the melt flow rate $MFR_2$ (230 °C) measured according to ISO 1133.

Preferably at least one of the polypropylene fractions is a propylene homopolymer, even more preferred all (two or three) polypropylene fractions are propylene homopolymers.

Thus in a preferred embodiment the matrix (M), i.e. the polypropylene (PP) of the heterophasic polypropylene composition (HECO) comprises

(a) a first polypropylene fraction (PP1) being a first propylene homopolymer (H-PP1) or a first random propylene copolymer (R-PP1),
(b) a second polypropylene fraction (PP2) being a second propylene homopolymer (H-PP2) or a second random propylene copolymer (R-PP2),
(c) a third polypropylene fraction (PP3) being a third propylene homopolymer (H-PP3) or a third random propylene copolymer (R-PP3),

with the proviso that at least one of the three fractions PP1, PP2, and PP3 is a propylene homopolymer, preferably at least the first polypropylene fraction (PP1) is a propylene homopolymer, more preferably all three fractions PP1, PP2, and PP3 are propylene homopolymers.

Preferably the melt flow rate $MFR_2$ (230 °C) increases from the first polypropylene fraction (PP1) to the third polypropylene fraction (PP3). Accordingly the ratio between the melt flow rate $MFR_2$ (230 °C) of the third polypropylene fraction (PP3) and the first polypropylene fraction (PP1) [MFR (PP3) / MFR (PP1)] is preferably at least 20, more preferably at least 50 and/or the the ratio between the melt flow rate $MFR_2$ (230 °C) of the third polypropylene fraction (PP3) and the second polypropylene fraction (PP2) [MFR (PP3) / MFR (PP2)] is preferably at least 8, more preferably at least 12.

In another preferred embodiment the melt flow rate $MFR_2$ (230 °C) increases from the first polypropylene fraction to the second polypropylene fraction (PP2) and from the second polypropylene fraction (PP2) to the third polypropylene fraction (PP3). Accordingly the second polypropylene fraction (PP2) has a higher melt flow rate $MFR_2$ (230 °C) than the first polypropylene fraction (PP1) but a lower melt flow rate $MFR_2$ (230 °C) than the third polypropylene fraction (PP3).

Thus the third polypropylene fraction (PP3) has the highest melt flow rate $MFR_2$ (230 °C) of the three polypropylenes fractions PP1, PP2, PP3, more preferably of all polymers present in the polypropylene (PP).

As mentioned above, it is in particular preferred that at least the first polypropylene fraction (PP1) is a propylene homopolymer, a so called first propylene homopolymer (H-PP1). Even more preferred this first polypropylene fraction (PP1) has the lowest melt flow rate $MFR_2$ (230 °C) of the three polypropylenes PP1, PP2, and PP3.

Still more preferred, in addition to the first polypropylene fraction (PP1) either the second polypropylene fraction (PP2) or the third polypropylene fraction (PP3) is a propylene homopolymer. In other words it is preferred that the polypropylene (PP) comprises, preferably consists of, only one polypropylene being a random propylene copolymer. Accordingly either the second polypropylene fraction (PP2) is a propylene homopolymer, so called second propylene homopolymer (H-PP2), or the third polypropylene fraction (PP3) is a propylene homopolymer, so called third propylene homopolymer (H-PP3).

It is especially preferred that all three polypropylene fractions, PP1, PP2, and PP3 are propylene homopolymers.

In the following the three polypropylene PP1, PP2, and PP3 will described in more detail.

As mentioned above the polypropylenes PP1, PP2, and PP3 can be random propylene copolymers or propylene homopolymers. In any case the comonomers content shall be rather low for each of the polypropylenes PP1, PP2, and PP3. Accordingly the comonomer content of each of the three polyropylenes PP1, PP2, and PP3 is not more than 1.0

wt.-%, yet more preferably not more than 0.8 wt.-%, still more preferably not more than 0.5 wt.-%. In case of the random propylene copolymers R-PP1, R-PP2, and R-PP3 it is appreciated that the comonomer content for each of the random propylene copolymers R-PP1, R-PP2, and R-PP3 is in the range of more than 0.2 to 1.0 wt.-%, more preferably in the range of more than 0.2 to 0.8 wt.-%, yet more preferably in the range of 0.2 to 0.7 wt.-%.

Concerning the comonomers used in the first random propylene copolymer (R-PP1), the second random propylene copolymer (R-PP2), and the third random propylene copolymer (R-PP3) it is referred to the information provided for the heterophasic polypropylene composition (HECO). Accordingly the R-PP1, R-PP2, and R-PP3 comprise independently from each other monomers copolymerizable with propylene, for example comonomers such as ethylene and/or $C_4$ to $C_{12}$ $\alpha$-olefins, in particular ethylene and/or $C_4$ to Cs $\alpha$-olefins, e.g. 1-butene and/or 1-hexene. Preferably R-PP1, R-PP2, and R-PP3 comprise independently from each other, especially consists independently from each other of, monomers copolymerizable with propylene from the group consisting of ethylene, 1-butene and 1-hexene. More specifically the R-PP1, R-PP2, and R-PP3 comprise independently from each other - apart from propylene - units derivable from ethylene and/or 1-butene. In a preferred embodiment the R-PP1, R-PP2, and R-PP3 have apart from propylene the same comonomers. Thus in an especially preferred embodiment the R-PP1, R-PP2, and R-PP3 comprise units derivable from ethylene and propylene only.

As stated above the first polypropylene (PP1) is a random propylene copolymer (R-PP1) or a propylene homopolymer (H-PP1), the latter being preferred.

The xylene cold soluble (XCS) content measured according to ISO 6427 (23 °C) of the first polypropylene (PP1) is preferably equal or below 3.5 wt.-%, more preferably equal or below 3.0 wt.-%, still more preferably in the range of 0.5 to 3.5 wt.-%, like in the range of 0.8 to 3.0 wt.%.

As stated above the first polypropylene (PP1) is featured by rather low melt flow rate $MFR_2$ (230 °C). Accordingly it is appreciated that the melt flow rate $MFR_2$ (230 °C) measured according to ISO 1133 is of not more than 0.1 g/10min, preferably of not more than 0.07 g/10min, still more preferably in the range of 0.001 to 0.1, yet more preferably in the range of 0.004 to 0.07 g/10min.

Alternatively or additionally the first polypropylene (PP1) is defined by a high molecular weight. Thus it appreciated that the first polypropylene (PP1) has a weight average molecular weight (Mw) measured by gel permeation chromatography (GPC; ISO 16014-4:2003) of at least 2,000 kg/mol, more preferably of at least 5,000 kg/mol, yet more preferably in the range of 2,000 to 50,000 kg/mol, still more preferably in the range of 5,000 to 20,000 kg/mol.

The second polypropylene (PP2) can be either a random propylene copolymer (second random propylene copolymer (R-PP2)) or a propylene homopolymer (a second propylene homopolymer (H-PP2)), the latter being preferred.

The xylene cold soluble (XCS) content measured according to ISO 6427 (23 °C) of the second polypropylene (PP2) is preferably equal or below 4.0 wt.-%, more preferably equal or below 3.5 wt.-%, still more preferably equal or below 3.0 wt.-%.

As stated above the second polypropylene (PP2) has a melt flow rate $MFR_2$ (230 °C) being lower than the third polypropylene (PP3). On the other hand the melt flow rate $MFR_2$ (230 °C) of the first polypropylene (PP1) can be lower or equally the same, preferably lower, as the melt flow rate $MFR_2$ (230 °C) of the second polypropylene (PP2). Accordingly it is appreciated that the second polypropylene (PP2) has melt flow rate $MFR_2$ (230 °C) measured according to ISO 1133 in the range of 0.005 to 2.0 g/10min, preferably in the range of 0.008 to 1.5 g/10min, like in the range of 0.008 to 1.0 g/10min.

Alternatively or additionally the second polypropylene (PP2) is defined by a high molecular weight. Thus it appreciated that the second polypropylene (PP2) has a weight average molecular weight (Mw) measured by gel permeation chromatography (GPC; ISO 16014-4:2003) of at least 500 kg/mol, more preferably of at least 800 kg/mol, yet more preferably in the range of 500 to 4,000 kg/mol, still more preferably in the range of 750 to 3,500 kg/mol.

Preferably the weight ratio between the first polypropylene (PP1) and the second polypropylene (PP2) is 82:18 to 25:75, more preferably 80:20 to 30:70.

The third polypropylene (PP3) can be either a random propylene copolymer (third random propylene copolymer (R-PP3)) or a propylene homopolymer (a third propylene homopolymer (H-PP3)), the latter being preferred.

The xylene cold soluble (XCS) content measured according to ISO 6427 (23 °C) of the third polypropylene (PP3) is preferably equal or below 4.5 wt.-%, more preferably equal or below 3.5 wt.-%, still more preferably below 2.5 wt.-%.

As stated above the third polypropylene (PP3) has preferably the highest melt flow rate $MFR_2$ (230 °C) of the three polypropylenes PP1. PP2, and PP3, more preferably the highest melt flow rate $MFR_2$ (230 °C) of the polymers present in the polypropylene (PP). Accordingly it is appreciated that the third polypropylene (PP3) has melt flow rate $MFR_2$ (230 °C) measured according to ISO 1133 of at least 4.0 g/10min, more preferably of at least 6.0 g/10min, yet more preferably in the range of 4.0 to 100 g/10min.

Alternatively or additionally the third polypropylene (PP3) is defined by its weight average molecular weight (Mw). Thus it appreciated that the third polypropylene (PP3) has a weight average molecular weight (Mw) measured by gel permeation chromatography (GPC; ISO 16014-4:2003) of not more than 800 kg/mol, more preferably of not more

than 700 kg/mol, yet more preferably in the range of 100 to 800 kg/mol.

Very good results are achievable in case the polypropylene (PP) comprises

(a) 15.0 to 35.0 wt.-%, preferably 16.0 to 32.0 wt.-%, of the first polypropylene (PP1),
(b) 12.0 to 48.0 wt.-%, preferably 13.0 to 45.0 wt.-%, of the second polypropylene (PP2), and
(c) 18.0 to 62.0 wt.-%, preferably 20.0 to 61.0 wt.-%, of the third polypropylene (PP3), based on the total amount of the first polypropylene (PP1), the second polypropylene (PP2), and the third polypropylene (PP3).

Preferably the polypropylene (PP) is produced in a sequential polymerization process, preferably as described in detail below. Accordingly the three polypropylenes PP1, PP2, and PP3 are an intimate mixture, which is not obtainable by mechanical blending.

A further essential component of the heterophasic polypropylene composition (HECO) is the elastomeric propylene copolymer (EC) dispersed in the matrix (M), i.e. in the polypropylene (PP). Concerning the comonomers used in the elastomeric propylene copolymer (EC) it is referred to the information provided for the polypropylene composition (HECO). Accordingly the elastomeric propylene copolymer (EC) comprises monomers copolymerizable with propylene, for example comonomers such as ethylene and/or $C_4$ to $C_{12}$ $\alpha$-olefins, in particular ethylene and/or $C_4$ to Cg $\alpha$-olefins, e.g. 1-butene and/or 1-hexene. Preferably the elastomeric propylene copolymer (EC) comprises, especially consists of, monomers copolymerizable with propylene from the group consisting of ethylene, 1-butene and 1-hexene. More specifically the elastomeric propylene copolymer (EC) comprises - apart from propylene - units derivable from ethylene and/or 1-butene. Thus in an especially preferred embodiment the elastomeric propylene copolymer (EC) comprises units derivable from ethylene and propylene only.

The properties of the elastomeric propylene copolymer (EC) mainly influences the xylene cold soluble (XCS) content as well as the amorphous phase (AM) of the final heterophasic polypropylene composition (HECO). Thus according to the present invention the amorphous phase (AM) of the heterophasic polypropylene composition (HECO) is regarded as the elastomeric propylene copolymer (EC) of the heterophasic polypropylene composition (HECO).

Accordingly one important requirement of the present invention is that the elastomeric propylene copolymer (EC) has a rather high average molecular weight. High intrinsic viscosity (IV) values reflect high a high average molecular weight. Thus it is appreciated that the with the amorphous phase (AM) of the xylene cold soluble fraction (XCS) of the heterophasic polypropylene composition (HECO) has a intrinsic viscosity (IV) measured according to ISO 1628-1 (at 135 °C in decaline) of at least 3.5 dl/g, more preferably of at least 3.8 dl/g, still more preferably in the range of 3.5 to 6.0 dl/g, like in the range of 3.8 to 5.0 dl/g.

The comonomer content, preferably the ethylene content, within the elastomeric propylene copolymer (EC) is cooperatively low. Accordingly in a preferred embodiment the comonomer content, more preferably ethylene content, of the amorphous phase (AM) of the xylene cold soluble fraction (XCS) of the heterophasic polypropylene composition (HECO) is below 40 wt.-%, more preferably below 37 wt.-%, yet more preferably in the range of 28.0 to 40.0 wt.-%, like 30.0 38.0 wt.-%.

The heterophasic polypropylene composition (HECO) according to this invention preferably comprises

(a) 85.0 to 92.0 wt.-%, more preferably 88.0 to 91.0 wt.-%, of the polypropylene (PP), and

(b) 5.0 to 15.0 wt.-%, more preferably 7.0 to 12.0 wt.-%, of the elastomeric copolymer (EC),

based on the total amount of the random propylene copolymer (R-PP) and the elastomeric copolymer (EC), wherein the amount of the elastomeric copolymer (EC) corresponds to the amount of the amorphous fraction (AM) of the xylene cold soluble (XCS) fraction.

As a further important component in the heterophasic polypropylene composition (HECO) an (anisotropic) mineral filler (F) must be present. An (anisotropic) mineral filler (F) according to this invention is preferably a mineral filler (F) selected from the group consisting of talc, wollastonite, clay, and mica. Especially preferred is that the (anisotropic) mineral filler (F) is talc. For instance talc can be used having a particle size d95 of 50 micrometer or less, preferably 30 micrometer or less, measured by laser diffraction according to ISO 13320-1:1999. According to one specific embodiment talc can be used having a particle size d50 of 20 micrometer or less, preferably 15 micrometer or less, said talc being further characterized by a specific surface according to BET measurement of more than 5 $m^2/g$, preferably more than 6 $m^2/g$.

A specific finding of the present invention is that the mineral filler (F) shall not be present in amounts above 29.0 wt.-%. Accordingly the heterophasic polypropylene composition (HECO) of the present invention comprises not more than 26.0 wt.-%, more preferably not more than 25.0 wt.-%, yet more preferably comprises 5.0 to 27.0 wt.-%, still yet more preferably 8.0 to 26.0 wt.-%, like 12 to 18 wt.-%, of the mineral filler (F).

Additionally the heterophasic polypropylene composition (HECO) of the instant invention is preferably featured

by the equation (1)

$$TM > 2040 + 56\,x\,(FC - XS) \quad (1)$$

wherein

TM is the tensile modulus [MPa] of the heterophasic polypropylene composition (HECO) measured according to ISO 527-2,
FC is the filler (F) content [wt.-%] of the heterophasic polypropylene composition (HECO)
XS is the xylene cold soluble (XCS) content [wt.-%] measured according to ISO 6427 (23 °C) of the heterophasic polypropylene composition (HECO).

Accordingly it is appreciated that heterophasic polypropylene composition (HECO) has

(i) a tensile modulus measured according to ISO 527-2 of at least 2200 MPa, more preferably of at least 2400 MPa, and/or
(ii) a charpy notched impact strength measured according to ISO 179 (1eA; -20 °C) of at least 3.0 kJ/$m^2$.

The heterophasic polypropylene composition (HECO) as defined in the instant invention may contain further additives - in addition to the mineral filler (F) - up to 2.0 wt.-% additives, like antioxidants as well as slip agents.

The instant invention is also directed to the use of the heterophasic polypropylene composition (HECO) for a pipe, like a non-pressure pipe, or for parts of a pipe, like a pressure pipe, and for the manufacture of pipes. It is furthermore directed to the use of the heterophasic polypropylene composition (HECO) for sheets, profiles and fittings, like fittings for non-pressure pipes.

Furthermore, the present invention relates to sheets, profiles, fittings, and pipes, like pipe fittings, in particular non-pressure pipes, comprising, preferably comprising at least 85 wt.-%, more preferably comprising at least 92 wt.-%, like at least 97 wt.-%, most preferably consists of, a Heterophasic polypropylene composition (HECO) as defined in the instant invention.

The term "pipe" as used herein is meant to encompass hollow articles having a length greater than diameter. Moreover the term "pipe" shall also encompass supplementary parts like fittings, valves and all parts which are commonly necessary for e.g. a indoor soil and waste or underground sewage piping system.

Pipes according to the invention encompass solid wall pipes and structured wall pipes. Solid wall pipes can be single layer pipes or multilayer pipes, however it is preferred that the sold wall pipe is a single layer pipe. Structured wall pipes preferably consist of two layers, one of which is a smooth inner layer while the other is a corrugated, spiral wound or ribbed outer layer. More preferably the inventive composition is comprised in at least one of the layers of such a structured wall pipe.

The heterophasic polypropylene composition (HECO) as defined above is preferably produced by a sequential polymerization process as defined below.

Accordingly the present invention is directed to in a sequential polymerization process for producing a heterophasic polypropylene composition (HECO) according to the instant invention, said heterophasic polypropylene composition (HECO) preferably comprises a first polypropylene (PP1), a second polypropylene (PP2), a third polypropylene (PP3), wherein said process comprises the steps of

(a1) polymerizing propylene and optionally at least one ethylene and/or at least one $C_4$ to $C_{12}$ $\alpha$-olefin in a first reactor (R1) obtaining the first polypropylene (PP1), preferably said first polypropylene (PP1) is a first propylene homopolymer (H-PP1),
(b1) transferring the first polypropylene (PP1) in a second reactor (R2),
(c1) polymerizing in the second reactor (R2) and in the presence of said first polypropylene (PP1) propylene and optionally at least one ethylene and/or a $C_4$ to $C_{12}$ $\alpha$-olefin obtaining thereby the second polypropylene (PP2), preferably said second polypropylene (PP2) is a second propylene homopolymer (H-PP2), the first polypropylene (PP1) being mixed with the second polypropylene (PP2),
(d1) transferring the mixture of step (c1) in a third reactor (R3),
(e1) polymerizing in the third reactor (R3) and in the presence of the mixture obtained in step (c1) propylene and optionally at least one ethylene and/or a $C_4$ to $C_{12}$ $\alpha$-olefin obtaining thereby a third polypropylene (PP3), preferably said third polypropylene (PP3) is a third propylene homopolymer (H-PP3), the first polypropylene (PP1), the second polypropylene (PP2) and the third polypropylene (PP3) form the polypropylene (PP),

(f1) transferring the polypropylene (PP) in a fourth reactor (R4),
(g1) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EC), the polypropylene (PP) and the elastomeric propylene copolymer (EC) form the heterophasic propylene copolymer (HECO), and
(h1) subsequently mixing said heterophasic polypropylene with a filler (F) obtaining thereby the heterophasic polypropylene composition (HECO).
or
(a2) polymerizing propylene and optionally at least one ethylene and/or a C4 to C20 $\alpha$-olefin in a first reactor (R1) obtaining the second polypropylene (PP2), preferably said second polypropylene (PP2) is a second propylene homopolymer (H-PP2),
(b2) transferring the second polypropylene (PP2) in a second reactor (R2),
(c2) polymerizing in the second reactor (R2) and in the presence of said second polypropylene (PP2) propylene and optionally at least one ethylene and/or a $C_4$ to $C_{12}$ $\alpha$-olefin obtaining thereby the third polypropylene (PP3), preferably said third polypropylene (PP3) is a third propylene homopolymer (H-PP3), the second polypropylene (PP2) being mixed with the third polypropylene (PP3),
(d2) transferring the mixture of step (c2) in a third reactor (R3),
(e2) polymerizing in the third reactor (R3) and in the presence of the mixture obtained in step (c2) propylene and optionally at least one ethylene and/or a $C_4$ to $C_{12}$ $\alpha$-olefin obtaining thereby a first polypropylene (PP1), preferably said first polypropylene (PP1) is a first propylene homopolymer (H-PP1), the first polypropylene (PP1), the second polypropylene (PP2) and the third polypropylene (PP3) form the polypropylene (PP),
(f2) transferring the polypropylene (PP) in a fourth reactor (R4),
(g2) polymerizing in the fourth reactor (R4) and in the presence of the polypropylene (PP) propylene and at least one ethylene and/or a $C_4$ to $C_{12}$ $\alpha$-olefin obtaining thereby a elastomeric propylene copolymer (EC), the polypropylene (PP) and the elastomeric propylene copolymer (EC) form the heterophasic propylene copolymer (HECO), and
(h2) subsequently mixing said heterophasic polypropylene with a filler (F) obtaining thereby the heterophasic polypropylene composition (ECO),
or
(a3) polymerizing propylene and optionally at least one ethylene and/or at least one $C_4$ to $C_{12}$ $\alpha$-olefin in a first reactor (R1) obtaining the first polypropylene (PP1), preferably said first polypropylene (PP1) is a first propylene homopolymer (H-PP1),
(b3) transferring the first polypropylene (PP1) in a second reactor (R2),
(c3) polymerizing in the second reactor (R2) and in the presence of said first polypropylene (PP1) propylene and optionally at least one ethylene and/or a $C_4$ to $C_{12}$ $\alpha$-olefin obtaining thereby the third polypropylene (PP3), preferably said third polypropylene (PP3) is a third propylene homopolymer (H-PP3), the first polypropylene (PP1) being mixed with the third polypropylene (PP3),
(d3) transferring the mixture of step (c1) in a third reactor (R3),
(e3) polymerizing in the third reactor (R3) and in the presence of the mixture obtained in step (c1) propylene and optionally at least one ethylene and/or a $C_4$ to $C_{12}$ $\alpha$-olefin obtaining thereby a second polypropylene (PP2), preferably said second polypropylene (PP2) is a second propylene homopolymer (H-PP2), the first polypropylene (PP1), the second polypropylene (PP2) and the third polypropylene (PP3) form the polypropylene (PP),
(f3) transferring the polypropylene (PP) in a fourth reactor (R4),
(g3) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EC), the polypropylene (PP) and the elastomeric propylene copolymer (EC) form the heterophasic propylene copolymer (HECO), and
(h3) subsequently mixing said heterophasic polypropylene with a filler (F) obtaining thereby the heterophasic polypropylene composition (HECO).

Preferably between the second reactor (R2) and the third reactor (R3) and optionally between the third reactor (R3) and fourth reactor (R4) the monomers are flashed out.

For preferred embodiments of the heterophasic polypropylene composition (HECO), the polypropylene (PP), the first polypropylene (PP1), the second polypropylene (PP2), and the third polypropylene (PP3), as well as for the elastomeric copolymer (EC) reference is made to the definitions given above.

The term "sequential polymerization process" indicates that the polypropylene is produced in at least four reactors connected in series. Accordingly the present process comprises at least a first reactor (R1), a second reactor (R2), a third reactor (R3) and a fourth reactor (R4). The term "polymerization reactor" shall indicate that the main polymerization takes place. Thus in case the process consists of four polymerization reactors, this definition does not exclude the option that the overall process comprises for instance a pre-polymerization step in a pre-polymerization reactor. The term "consist of" is only a closing formulation in view of the main polymerization reactors.

The first reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

The second reactor (R2), the third reactor (R3) and the fourth reactor (R4) are preferably gas phase reactors (GPR). Such gas phase reactors (GPR) can be any mechanically mixed or fluid bed reactors. Preferably the gas phase reactors (GPR) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first reactor (R1) is a slurry reactor (SR), like loop reactor (LR), whereas the second reactor (R2), the third reactor (R3) and the fourth reactor (R4) are gas phase reactors (GPR). Accordingly for the instant process at least four, preferably four polymerization reactors, namely a slurry reactor (SR), like loop reactor (LR), a first gas phase reactor (GPR-1), a second gas phase reactor (GPR-2) and a third gas phase reactor (GPR-3) connected in series are used. If needed prior to the slurry reactor (SR) a pre-polymerization reactor is placed.

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Preferably, in the instant process for producing the heterophasic polypropylene composition (HECO) as defined above the conditions for the first reactor (R1), i.e. the slurry reactor (SR), like a loop reactor (LR), of step (a) may be as follows:

- the temperature is within the range of 50 °C to 110 °C, preferably between 60 °C and 100 °C, more preferably between 68 to 95 °C,
- the pressure is within the range of 20 bar to 80 bar, preferably between 40 bar to 70 bar,
- hydrogen can be added for controlling the molar mass in a manner known per se.

Subsequently, the reaction mixture from step (a) is transferred to the second reactor (R2), i.e. gas phase reactor (GPR-1), i.e. to step (c), whereby the conditions in step (c) are preferably as follows:

- the temperature is within the range of 50 °C to 130 °C, preferably between 60 °C and 100 °C,
- the pressure is within the range of 5 bar to 50 bar, preferably between 15 bar to 35 bar,
- hydrogen can be added for controlling the molar mass in a manner known per se.

The condition in the third reactor (R3) and the fourth reactor (R4), preferably in the second gas phase reactor (GPR-2) and third gas phase reactor (GPR-4), is similar to the second reactor (R2).

The residence time can vary in the three reactor zones.

In one embodiment of the process for producing the polypropylene the residence time in bulk reactor, e.g. loop is in the range 0.1 to 2.5 hours, e.g. 0.15 to 1.5 hours and the residence time in gas phase reactor will generally be 0.2 to 6.0 hours, like 0.5 to 4.0 hours.

If desired, the polymerization may be effected in a known manner under supercritical conditions in the first reactor (R1), i.e. in the slurry reactor (SR), like in the loop reactor (LR), and/or as a condensed mode in the gas phase reactors (GPR).

Preferably the process comprises also a prepolymerization with the catalyst system, as described in detail below, comprising a Ziegler-Natta procatalyst, an external donor and optionally a cocatalyst.

In a preferred embodiment, the prepolymerization is conducted as bulk slurry polymerization in liquid propylene, i.e. the liquid phase mainly comprises propylene, with minor amount of other reactants and optionally inert components dissolved therein.

The prepolymerization reaction is typically conducted at a temperature of 10 to 60 °C, preferably from 15 to 50 °C, and more preferably from 20 to 45 °C.

The pressure in the prepolymerization reactor is not critical but must be sufficiently high to maintain the reaction mixture in liquid phase. Thus, the pressure may be from 20 to 100 bar, for example 30 to 70 bar.

The catalyst components are preferably all introduced to the prepolymerization step. However, where the solid catalyst component (i) and the cocatalyst (ii) can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic

additive may be used to prevent the particles from adhering to each other or to the walls of the reactor.

The precise control of the prepolymerization conditions and reaction parameters is within the skill of the art.

According to the invention the heterophasic polypropylene composition (HECO) is obtained by a multistage polymerization process, as described above, in the presence of a catalyst system comprising as component (i) a Ziegler-Natta procatalyst which contains a transesterification product of a lower alcohol and a phthalic ester.

The procatalyst used according to the invention is prepared by

a) reacting a spray crystallized or emulsion solidified adduct of $MgCl_2$ and a $C_1$-$C_2$ alcohol with $TiCl_4$

b) reacting the product of stage a) with a dialkylphthalate of formula (I)

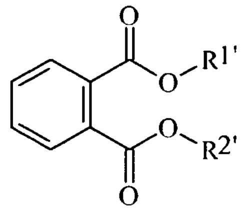

(I)

wherein $R^{1'}$ and $R^{2'}$ are independently at least a $C_5$ alkyl

under conditions where a transesterification between said $C_1$ to $C_2$ alcohol and said dialkylphthalate of formula (I) takes place to form the internal donor

c) washing the product of stage b) or

d) optionally reacting the product of step c) with additional $TiCl_4$.

The procatalyst is produced as defined for example in the patent applications WO 87/07620, WO 92/19653, WO 92/19658 and EP 0 491 566. The content of these documents is herein included by reference.

First an adduct of $MgCl_2$ and a $C_1$-$C_2$ alcohol of the formula $MgCl_2$*nROH, wherein R is methyl or ethyl and n is 1 to 6, is formed. Ethanol is preferably used as alcohol.

The adduct, which is first melted and then spray crystallized or emulsion solidified, is used as catalyst carrier.

In the next step the spray crystallized or emulsion solidified adduct of the formula $MgCl_2$*nROH, wherein R is methyl or ethyl, preferably ethyl and n is 1 to 6, is contacting with $TiCl_4$ to form a titanised carrier, followed by the steps of

- adding to said titanized carrier

  (i) a dialkylphthalate of formula (I) with $R^{1'}$ and $R^{2'}$ being independently at least a $C_5$-alkyl, like at least a $C_8$-alkyl, or preferably

  (ii) a dialkylphthalate of formula (I) with $R^{1'}$ and $R^{2'}$ being the same and being at least a $C_5$-alkyl, like at least a $C_8$-alkyl,

  or more preferably

  (iii) a dialkylphthalate of formula (I) selected from the group consisting of propylhexylphthalate (PrHP), dioctylphthalate (DOP), di-iso-decylphthalate (DIDP), and ditridecylphthalate (DTDP), yet more preferably the dialkylphthalate of formula (I) is a dioctylphthalate (DOP), like di-iso-octylphthalate or diethylhexylphthalate, in particular diethylhexylphthalate,

  to form a first product,
- subjecting said first product to suitable transesterification conditions, i.e. to a temperature above 100 °C, preferably between 100 to 150 °C, more preferably between 130 to 150 °C, such that said methanol or ethanol is transesterified with said ester groups of said dialkylphthalate of formula (I) to form preferably at least 80 mol-%, more preferably 90 mol-%, most preferably 95 mol.-%, of a dialkylphthalate of formula (II)

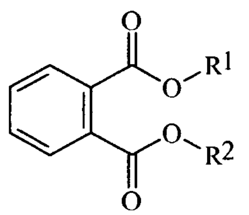

(II)

with $R^1$ and $R^2$ being methyl or ethyl, preferably ethyl,
the dialkylphthalat of formula (II) being the internal donor and

- recovering said transesterification product as the procatalyst composition (component (i)).

The adduct of the formula $MgCl_2$*nROH, wherein R is methyl or ethyl and n is 1 to 6, is in a preferred embodiment melted and then the melt is preferably injected by a gas into a cooled solvent or a cooled gas, whereby the adduct is crystallized into a morphologically advantageous form, as for example described in WO 87/07620.
This crystallized adduct is preferably used as the catalyst carrier and reacted to the procatalyst useful in the present invention as described in WO 92/19658 and WO 92/19653.
As the catalyst residue is removed by extracting, an adduct of the titanized carrier and the internal donor is obtained, in which the group deriving from the ester alcohol has changed.
In case sufficient titanium remains on the carrier, it will act as an active element of the procatalyst.
Otherwise the titanization is repeated after the above treatment in order to ensure a sufficient titanium concentration and thus activity.
Preferably the procatalyst used according to the invention contains 2.5 wt.-% of titanium at the most, preferably 2.2% wt.-% at the most and more preferably 2.0 wt.-% at the most. Its donor content is preferably between 4 to 12 wt.-% and more preferably between 6 and 10 wt.-%.
More preferably the procatalyst used according to the invention has been produced by using ethanol as the alcohol and dioctylphthalate (DOP) as dialkylphthalate of formula (I), yielding diethyl phthalate (DEP) as the internal donor compound.
Still more preferably the catalyst used according to the invention is the BC-1 catalyst of Borealis (prepared according to WO 92/19653 as disclosed in WO 99/24479; especially with the use of dioctylphthalate as dialkylphthalate of formula (1) according to WO 92/19658) or the catalyst Polytrack 8502, commercially available from Grace.
For the production of the heterophasic polypropylene composition (HECO) according to the invention the catalyst system used preferably comprises in addition to the special Ziegler-Natta procatalyst an organometallic cocatalyst as component (ii).
Accordingly it is preferred to select the cocatalyst from the group consisting of trialkylaluminium, like triethylaluminium (TEA), dialkyl aluminium chloride and alkyl aluminium sesquichloride.
Component (iii) of the catalysts system used is an external donor represented by formula (III)

$$Si(OCH_3)_2R_2^5 \qquad (III)$$

wherein $R^5$ represents a branched-alkyl group having 3 to 12 carbon atoms, preferably a branched-alkyl group having 3 to 6 carbon atoms, or a cyclo-alkyl having 4 to 12 carbon atoms, preferably a cyclo-alkyl having 5 to 8 carbon atoms.
It is in particular preferred that $R^5$ is selected from the group consisting of iso-propyl, iso-butyl, iso-pentyl, tert.-butyl, tert.-amyl, neopentyl, cyclopentyl, cyclohexyl, methylcyclopentyl and cycloheptyl.
More preferably the external donor is selected from the group consisting of diethylaminotriethoxysilane $[Si(OCH_2CH_3)_3(N(CH_2CH_3)_2)]$, dicyclopentyl dimethoxy silane $[Si(OCH_3)_2(cyclo\text{-}pentyl)_2]$, diisopropyl dimethoxy silane $[Si(OCH_3)_2(CH(CH_3)_2)_2]$ and mixtures thereof.
In a further embodiment, the Ziegler-Natta procatalyst can be modified by polymerizing a vinyl compound in the presence of the catalyst system, comprising the special Ziegler-Natta procatalyst (component (i)), an external donor (component (iii) and optionally a cocatalyst (component (iii)), which vinyl compound has the formula:

$$CH_2=CH-CHR^3R^4$$

wherein $R^3$ and $R^4$ together form a 5- or 6-membered saturated, unsaturated or aromatic ring or independently represent an alkyl group comprising 1 to 4 carbon atoms, and the modified catalyst is used for the preparation of the heterophasic polypropylene composition according to this invention. The polymerized vinyl compound can act as an $\alpha$-nucleating agent.
Concerning the modification of catalyst reference is made to the international applications WO 99/24478, WO 99/24479 and particularly WO 00/68315, incorporated herein by reference with respect to the reaction conditions concerning the modification of the catalyst as well as with respect to the polymerization reaction.
The additives as stated above, in particular the filler (F), are added afterwards to the heterophasic polypropylene (HECO), which is collected from the final reactor of the series of reactors. Preferably, these additives are mixed into the composition prior to or during the extrusion process in a one-step compounding process. Alternatively, a master batch may be formulated, wherein the heterophasic polypropylene (HECO) is first mixed with only some of the additives.
For mixing, a conventional compounding or blending apparatus, e.g. a Banbury mixer, a 2-roll rubber mill, Buss-co-kneader or a twin screw extruder may be used. The polymer materials recovered from the extruder are usually in the

form of pellets. These pellets are then preferably further processed, e.g. by injection molding to generate articles, like pipes, of the inventive heterophasic polypropylene composition (HECO).

The heterophasic heterophasic polypropylene composition (HECO) according to the invention may be pelletized and compounded using any of the variety of compounding and blending methods well known and commonly used in the resin compounding art.

In the following the present invention is further illustrated by means of examples.

**EXAMPLES**

**A. Measuring methods**

The following definitions of terms and determination methods apply for the above general description of the invention as well as to the below examples unless otherwise defined.

**Calculation** of comonomer content of the second polypropylene (PP2):

$$\frac{C(R2) - w(PP1)x\,C(PP1)}{w(PP2)} = C(PP2) \quad (I)$$

wherein

w(PP1) is the weight fraction of the first polypropylene (PP1), i.e. the product of the first reactor (R1),
w(PP2) is the weight fraction of the second polypropylene (PP2), i.e. of the polymer produced in the second reactor (R2),
C(PP1) is the comonomer content [in wt.-%] measured by Fourier transform infrared spectroscopy (FTIR) of the first polypropylene (PP1), i.e. of the product of the first reactor (R1),
C(R2) is the comonomer content [in wt.-%] measured by Fourier transform infrared spectroscopy (FTIR) of the product obtained in the second reactor (R2), i.e. the mixture of the first polypropylene (PP1) and the second polypropylene (PP2),
C(PP2) is the calculated comonomer content [in wt.-%] of the second polypropylene (PP2).

**Calculation** of the xylene cold soluble (XCS) content of the second polypropylene (PP2):

$$\frac{XS(R2) - w(PP1)x\,XS(PP1)}{w(PP2)} = XS(PP2) \quad (II)$$

wherein

w(PP1) is the weight fraction of the first polypropylene (PP1), i.e. the product of the first reactor (R1),
w(PP2) is the weight fraction of the second polypropylene (PP2), i.e. of the polymer produced in the second reactor (R2),
XS(PP1) is the xylene cold soluble (XCS) content [in wt.-%] as determined at 23°C according to ISO 6427 of the first polypropylene (PP1), i.e. of the product of the first reactor (R1),
XS(R2) is the xylene cold soluble (XCS) content [in wt.-%] as determined at 23°C according to ISO 6427 of the product obtained in the second reactor (R2), i.e. the mixture of the first polypropylene (PP1) and the second polypropylene (PP2),
XS(PP2) is the calculated xylene cold soluble (XCS) content [in wt.-%] of the second polypropylene (PP2).

**Calculation** of melt flow rate $MFR_2$ (230 °C) of the second polypropylene (PP2):

$$MFR(PP2) = 10^{\left[\frac{\log(MFR(R2)) - w(PP1)\,x\,\log(MFR(PP1))}{w(PP2)}\right]} \quad (I)$$

wherein

w(PP1) is the weight fraction of the first polypropylene (PP1), i.e. the product of the first reactor (R1),
w(PP2) is the weight fraction of the second polypropylene (PP2), i.e. of the polymer produced in the second reactor (R2),
MFR(PP1) is the melt flow rate $MFR_2$ (230 °C) [in g/10min] measured according ISO 1133 of the first polypropylene (PP1), i.e. of the product of the first reactor (R1),
MFR(R2) is the melt flow rate $MFR_2$ (230 °C) [in g/10min] measured according ISO 1133 of the product obtained in the second reactor (R2), i.e. the mixture of the first polypropylene (PP1) and the second polypropylene (PP2),
MFR(PP2) is the calculated melt flow rate $MFR_2$ (230 °C) [in g/10min] of the second polypropylene (PP2).

**Calculation** of comonomer content of the third polypropylene (PP3):

$$\frac{C(R3) - w(R2)x\,C(R2)}{w(PP3)} = C(PP3) \quad (IV)$$

wherein

w(R2) is the weight fraction of the second reactor (R2), i.e. the mixture of the first polypropylene (PP1) and the second polypropylene (PP2),
w(PP3) is the weight fraction of the third polypropylene (PP3), i.e. of the polymer produced in the third reactor (R3),
C(R2) is the comonomer content [in wt.-%] measured by Fourier transform infrared spectroscopy (FTIR) of the product of the second reactor (R2), i.e. of the mixture of the first polypropylene (PP1) and second polypropylene (PP2),
C(R3) is the comonomer content [in wt.-%] measured by Fourier transform infrared spectroscopy (FTIR) of the product obtained in the third reactor (R3), i.e. the mixture of the first polypropylene (PP1), the second polypropylene (PP2), and the third polypropylene (PP3),
C(PP3) is the calculated comonomer content [in wt.-%] of the third polypropylene (PP3).

**Calculation** of xylene cold soluble (XCS) content of the third polypropylene (PP3):

$$\frac{XS(R3) - w(R2)x\,XS(R2)}{w(PP3)} = XS(PP3) \quad (V)$$

wherein

w(R2) is the weight fraction of the second reactor (R2), i.e. the mixture of the first polypropylene (PP1) and the second polypropylene (PP2),
w(PP3) is the weight fraction of the third polypropylene (PP3), i.e. of the polymer produced in the third reactor (R3),
XS(R2) is the xylene cold soluble (XCS) content [in wt.-%] as determined at 23°C according to ISO 6427 of the product of the second reactor (R2), i.e. of the mixture of the first polypropylene (PP1) and second polypropylene (PP2),
XS(R3) is the xylene cold soluble (XCS) content [in wt.-%] as determined at 23°C according to ISO 6427 of the product obtained in the third reactor (R3), i.e. the mixture of the first polypropylene (PP1), the second polypropylene (PP2), and the third polypropylene (PP3),
XS(PP3) is the calculated xylene cold soluble (XCS) content [in wt.-%] of the third polypropylene (PP3).

**Calculation** of melt flow rate $MFR_2$ (230 °C) of the third polypropylene (PP3):

$$MFR(PP3) = 10^{\left[\frac{\log(MFR(R3)) - w(R2)\,x\,\log(MFR(R2))}{w(PP3)}\right]} \quad (II)$$

wherein

w(R2) is the weight fraction of the second reactor (R2), i.e. the mixture of the first polypropylene (PP1) and the

second polypropylene (PP2),

w(PP3) is the weight fraction of the third polypropylene (PP3), i.e. of the polymer produced in the third reactor (R3),

MFR(R2) is the melt flow rate $MFR_2$ (230 °C) [in g/10min] measured according ISO 1133 of the product of the second reactor (R2), i.e. of the mixture of the first polypropylene (PP1) and second polypropylene (PP2),

MFR(R3) is the melt flow rate $MFR_2$ (230 °C) [in g/10min] measured according ISO 1133 of the product obtained in the third reactor (R3), i.e. the mixture of the first polypropylene (PP1), the second polypropylene (PP2), and the third polypropylene (PP3),

MFR(PP3) is the calculated melt flow rate $MFR_2$ (230 °C) [in g/10min] of the third polypropylene (PP3).

**NMR-spectroscopy measurements:**

The $^{13}$C-NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature: (T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**Randomness**

In the FTIR measurements, films of 250 -mm thickness were compression moulded at 225 °C and investigated on a Perkin-Elmer System 2000 FTIR instrument. The ethylene peak area (760-700 $cm^{-1}$) was used as a measure of total ethylene content. The absorption band for the structure -P-E-P- (one ethylene unit between propylene units), occurs at 733 $cm^{-1}$. This band characterizes the random ethylene content. For longer ethylene sequences (more than two units), an absorption band occurs at 720 $cm^{-1}$. Generally, a shoulder corresponding to longer ethylene runs is observed for the random copolymers. The calibration for total ethylene content based on the area and random ethylene (PEP) content based on peak height at 733 $cm^{-1}$ was made by $^{13}$C-NMR. (Thermochimica Acta, 66 (1990) 53-68)

**Number average molecular weight ($M_n$), weight average molecular weight (M".)** and **molecular weight distribution (MWD)** are determined by Gel Permeation Chromatography (GPC) according to the following method:

The weight average molecular weight Mw and the molecular weight distribution (MWD = Mw/Mn wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methylphenol) as solvent at 145 °C and at a constant flow rate of 1 mL/min. 216.5 μL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**Rheology:** Dynamic rheological measurements were carried out with Rheometrics RDA-II QC on compression molded samples under nitrogen atmosphere at 200°C using 25 mm - diameter plate and plate geometry. The oscillatory shear experiments were done within the linear viscoelastic range of strain at frequencies from 0.01 to 500 rad/s. (ISO 6721-10)

The values of storage modulus (G'), loss modulus (G"), complex modulus (G*) and complex viscosity (η*) were obtained as a function of frequency (ω).

The Zero shear viscosity ($\eta_0$) was calculated using complex fluidity defined as the reciprocal of complex viscosity. Its real and imaginary part are thus defined by

$$f'(\omega) = \eta'(\omega) / [\eta'(\omega)^2 + \eta''(\omega)^2]$$

and

$$f''(\omega) = \eta''(\omega) / [\eta'(\omega)^2 + \eta''(\omega)^2]$$

From the following equations

$$\eta' = G'' / \omega \quad \text{and} \quad \eta'' = G' / \omega$$

$$f'(\omega) = G''(\omega) * \omega / [G'(\omega)^2 + G''(\omega)^2]$$

$$f''(\omega) = G'(\omega) * \omega / [G'(\omega)^2 + G''(\omega)^2]$$

**The polydispersity index, PI,**
PI = $10^5$/Gc, is calculated from the cross-over point of G'(ω) and G"(ω), for which G'(ωc) = G"(ωc) = Gc holds.

**Shear thinning indexes (SHI),** which are correlating with MWD and are independent of MW, were calculated according to Heino[1,2]) (below). The SHI (3/100) is defined as the ratio of the complex viscosity at 200°C and a shear stress of 3 kPa (η*3) and the complex viscosity at 200°C and a shear stress of 100 kPa (η*100). The SHI (0/50) is defined as the ratio between the zero shear viscosity and the viscosity at the shear stress of 50 000 Pa.

1) Rheological characterization of polyethylene fractions. Heino, E.L.; Lehtinen, A; Tanner, J.; Seppälä, J. Neste Oy, Porvoo, Finland. Theor. Appl. Rheol., Proc. Int. Congr. Rheol., 11th (1992), 1 360-362
2) The influence of molecular structure on some rheological properties of polyethylene. Heino, Eeva-Leena. Borealis Polymers Oy, Porvoo, Finland. Annual Transactions of the Nordic Rheolooy Society, 1995

**Crossover frequency ωc**

The crossover frequency ωc is determined from the cross-over point of G'(ω) and G"(ω), for which G'(ωc) = G"(ωc) = Gc holds.

**Melt Flow Rate ($MFR_2$)**

The melt flow rates were measured with a load of 2.16 kg ($MFR_2$) at 230 °C. The melt flow rate is that quantity of polymer in grams which the test apparatus standardized to ISO 1133 extrudes within 10 minutes at a temperature of 230 °C under a load of 2.16 kg.

**Comonomer content**

The comonomer contents of the copolymer was determined by quantitative Fourier transform infrared spectroscopy (FTIR) calibrated to results obtained from quantitative $^{13}C$ NMR spectroscopy.

Thin films were pressed to a thickness of between 300 to 500 µm at 190 °C and spectra recorded in transmission mode. Relevant instrument settings include a spectral window of 5000 to 400 wave-numbers ($cm^{-1}$), a resolution of 2.0 $cm^{-1}$ and 8 scans.

The butene content of a propylene-butene copolymer was determined using the baseline corrected peak maxima of a quantitative band at 767 $cm^{-1}$, with the baseline defined from 780-750 $cm^{-1}$.

The hexene content of a propylene-hexene copolymer was determined using the baseline corrected peak maxima of a quantitative band at 727 $cm^{-1}$, with the baseline defined from 758.5 to 703.0 $cm^{-1}$)

The comonomer content C was determined using a film thickness method using the intensity of the quantitative band I(q) and the thickness of the pressed film T using the following relationship: [I(q) / T]m + c = C where m and c are the coefficients determined from the calibration curve constructed using the comonomer contents obtained from $^{13}C$ NMR spectroscopy.

**Xylene cold soluble fraction (XCS wt%)**

The xylene cold soluble fraction (XCS) is determined at 23 °C according to ISO 6427.

**The amorphous content (AM)** is measured by separating the above xylene cold soluble fraction (XCS) and precipitating the amorphous part with acetone. The precipitate was filtered and dried in a vacuum oven at 90 °C.

$$AM\% = \frac{100\ x\ m1\ x\ v0}{m0\ x\ v1}$$

wherein

"AM%" is the amorphous fraction,
"m0" is initial polymer amount (g)
"m1" is weight of precipitate (g)
"v0" is initial volume (ml)
"v1" is volume of analyzed sample (ml)

**Melting temperature $T_m$, crystallization temperature $T_c$,** is measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

Also the melt- and crystallization enthalpy **(Hm and He)** were measured by the DSC method according to ISO 11357-3.

**Stepwise Isothermal Segregation Technique (SIST)**

The isothermal crystallisation for SIST analysis was performed in a Mettler TA820 DSC on 3±0.5 mg samples at decreasing temperatures between 200°C and 105°C.

(i) the samples were melted at 225 °C for 5 min.,
(ii) then cooled with 80 °C/min to 145 °C
(iii) held for 2 hours at 145 °C,
(iv) then cooled with 80 °C/min to 135 °C
(v) held for 2 hours at 135 °C,
(vi) then cooled with 80 °C/min to 125 °C
(vii) held for 2 hours at 125 °C,
(viii) then cooled with 80 °C/min to 115 °C
(ix) held for 2 hours at 115 °C,
(x) then cooled with 80 °C/min to 105 °C
(xi) held for 2 hours at 105 °C.

After the last step the sample was cooled down with 80 °C/min to -10 °C and the melting curve was obtained by heating the cooled sample at a heating rate of 10°C/min up to 200°C. All measurements were performed in a nitrogen atmosphere. The melt enthalpy is recorded as function of temperature and evaluated through measuring the melt enthalpy of fractions melting within temperature intervals of 50 to 60 °C; 60 to 70 °C; 70 to 80 °C; 80 to 90 °C; 90 to 100 °C; 100 to 110 °C; 110 to 120 °C; 120 to 130 °C; 130 to 140 °C; 140 to 150 °C; 150 to 160 °C; 160 to 170 °C; 170 to 180 °C; 180 to 190 °C; 190 to 200 °C.

The melting curve of the material crystallised this way can be used for calculating the lamella thickness distribution according to Thomson-Gibbs equation (Eq 1.).

$$T_m = T_0\left(1 - \frac{2\sigma}{\Delta H_0 \cdot L}\right) \qquad (1)$$

where $T_0$=457K, $\Delta H_0$ = 134x10$^6$ J/m$^3$, $\sigma$ = 49.6x10$^{-3}$ J/m$^3$ and L is the lamella thickness. **Tensile Modulus** is measured according to ISO 527-2 (cross head speed = 50 mm/min; 23 °C) using injection molded specimens as described in EN ISO 1873-2 (dog bone shape, 4 mm thickness).

**Charpy notched impact** strength is determined according to ISO 179 / 1eA at 23 °C, at 0 °C and at -20 °C by using injection moulded test specimens as described in EN ISO 1873-2 (80 x 10 x 4 mm).

**B. Examples**

All polymers were produced in a Borstar pilot plant with a prepolymerization reactor, one slurry loop reactor and three gas phase reactors. The catalyst Polytrack 8502, commercially available from Grace (US) was used in combination with diethylaminotriethoxysilane $[Si(OCH_2CH_3)_3(N(CH_2CH_3)_2)]$ as external donor and triethylaluminium (TEAL) as activator and scavenger in the ratios indicated in table 1. The "dynamic hydrogen feed" indicated in table 1 for the loop reactor was achieved by pulse feeding of hydrogen to the prepolymerization reactor in intervals of 30 min with a pulse duration of 5 min, resulting in a variation of the effective H2/C3 ratio in the loop reactor between 25 and 110 mol/mol in a sawtooth function with a period of 30 min. The polymer of the comparative example was produced with the same catalyst system, but in a more conventional way with one slurry loop and two gas phase reactors, not applying dynamic hydrogen feed and producing the elastomeric propylene copolymer (EC) in the second gas phase reactor.

**Table 1:** Preparation of the heterophasic propylene copolymers (HECO)

| Parameter | unit | E1 | E2 | E3 |
|---|---|---|---|---|
| **Prepolymerization** | | | | |
| temperature | [°C] | 35 | 35 | 35 |
| pressure | [kPa] | 5100 | 5100 | 5200 |
| Al/donor ratio | [mol/mol] | 4 | 4 | 4 |
| residence time | [h] | 0.3 | 0.3 | 0.3 |
| **Loop** | | | | |
| temperature | [°C] | 85 | 85 | 85 |
| pressure | [kPa] | 5500 | 5500 | 5400 |
| residence time | [h] | 0.14 | 0.14 | 0.17 |
| ethylene feed | [kg/h] | 0 | 0 | 0 |
| H2/C3 ratio | [mol/kmol] | dyn. $H_2$-feed | dyn. $H_2$-feed | dyn. $H_2$-feed |
| **GPR 1** | | | | |
| temperature | [°C] | 80 | 80 | 80 |
| pressure | [kPa] | 2150 | 2100 | 2100 |
| residence time | [h] | 2.2 | 2.2 | 2.3 |
| ethylene feed | [kg/h] | 0 | 0 | 0 |
| H2/C3 ratio | [mol/kmol] | 31.3 | 49 | 3.1 |
| C2/C3 ratio | [mol/kmol] | 0 | 0 | 0 |
| **GPR 2** | | | | |
| temperature | [°C] | 85 | 85 | 85 |
| pressure | [kPa] | 3200 | 3200 | 3200 |
| residence time | [h] | 2.9 | 2.9 | 2.6 |
| ethylene feed | [kg/h] | 0.12 | 0.13 | 0.11 |
| H2/C3 ratio | [mol/mol] | 0.02 | 0.03 | 71 |
| C2/C3 ratio | [mol/kmol] | 0 | 0 | 0 |
| **GPR 3** | | | | |
| temperature | [°C] | 70 | 70 | 75 |
| pressure | [kPa] | 2100 | 2100 | 2200 |
| residence time | [h] | 0.7 | 0.7 | 0.9 |
| ethylene feed | [kg/h] | 27 | 27 | 27 |

(continued)

| GPR 3 | | | | |
|---|---|---|---|---|
| H2/C2 ratio | [mol/kmol] | 18 | 21 | 22 |
| C2/C3 ratio | [mol/kmol] | 555 | 538 | 550 |

**Table 2:** Properties of the heterophasic polypropylene (HECO), Loop, GPR1, GPR2

| | | E 1 | E 2 | E 3 | CE 1 |
|---|---|---|---|---|---|
| | | H/H/H/EPR | H/H/H/EPR | H/H/H/EPR | |
| **Loop** | | | | | |
| Loop/GPR1/GPR2 | [wt.-%] | 31.4/41.6/27.0 | 36.3/37.7/26.0 | 39.5/44.5/16.0 | |
| Loop/GPR | [wt.-%] | 32/68 | 41/59 | 40/60 | |
| $MFR_2$ (PP1) | [g/10 min] | 0.022 | - | 0.020 | |
| $MFR_2$ (PP2) | [g/10 min] | - | 0.020 | - | |
| XCS (PP1) | [wt.-%] | 2.3 | - | 2.5 | |
| XCS (PP2) | [wt.-%] | - | 2.4 | - | |
| C2 content (PP1) | [wt.-%] | - | - | - | |
| **GPR1** | | | | | |
| $MFR_2$ of GPR1 | [g/10 min] | 1.18 | 1.04 | 0.14 | |
| $MFR_2$ of PP2 | [g/10 min] | - | - | 0.6 | |
| $MFR_2$ of PP3 | [g/10 min] | 7.7 | 21.0 | - | |
| XCS of GPR1 | [wt.-%] | 1.5 | 1.3 | 1.4 | |
| C2 of GPR1 | [wt.-%] | - | - | - | |
| **GPR2** | | | | | |
| $MFR_2$ of GPR2 | [g/10 min] | 0.77 | 0.38 | 0.48 | |
| $MFR_2$ of PP1 | [g/10 min] | - | 0.005 | - | |
| $MFR_2$ of PP2 | [g/10 min] | 0.060 | - | - | |
| $MFR_2$ of PP3 | [g/10 min] | - | - | 9.619 | |
| XCS of GPR2 | [wt.-%] | 1.3 | 1.4 | 1.1 | |
| C2 of GPR2 | [wt.-%] | - | - | - | |
| Tm | [°C] | 169 | 169 | 168 | 166 |
| Tc | [°C] | 130 | 128 | 128 | 126 |
| Mn | [kg/mol] | 79 | 88 | 86 | 160 |
| Mw | [kg/mol] | 575 | 643 | 628 | 855 |
| $\omega_c$ | [rad/s] | 2.3 | 0.9 | 2 | 0.7 |
| SHI 3/100 | [-] | 80 | 85 | 51 | 20 |
| PI | [-] | 7.6 | 7.9 | 6.2 | 4.3 |
| Lc (24.2-84.6 nm) from SIST | [wt.-%] | - | 42.9 | 42.1 | - |

**Table 3:** Properties of the heterophasic polypropylene (HECO); GPR3/Final Properties

| | | E 1 | E 2 | E 3 | CE 1 |
|---|---|---|---|---|---|
| | | H/H/H/EPR | H/H/H/EPR | H/H/H/EPR | |
| **GPR3/Final Product** | | | | | |
| $MFR_2$ of GPR3 | [g/10 min] | 0.30 | 0.34 | 0.42 | 0.30 |
| XCS of GPR3 | [wt.-%] | 9.9 | 11.4 | 9.8 | 10.5 |
| AM of GPR3 | [wt.-%] | 8.8 | 10.7 | 9.1 | 10.0 |
| C2 of GPR3 | [wt.-%] | 3.7 | 3.9 | 3.3 | 3.7 |
| C2 of AM | [wt.-%] | 36.0 | 32.9 | 34.6 | 34.0 |
| viscosity of AM | [dl/g] | 4.2 | 4.2 | 4.0 | 3.8 |
| SHI 3/100 | [-] | 104 | 95 | 40 | 28 |
| SHI 0/50 | [-] | 126 | 83 | 32 | 19 |
| PI | [-] | 8.8 | 8.3 | 5.5 | 4.7 |
| $\omega_c$ | [rad/s] | 0.59 | 0.57 | 1.80 | 1.74 |
| Tm | [°C] | 168 | 168 | 169 | 167 |
| Tcr | [°C] | 131 | 129 | 129 | 126 |
| Stress at yield | [MPa] | 34.6 | 33.6 | 34.4 | 33.7 |
| Strain at yield | [%] | 7.0 | 7.9 | 7.1 | 8.0 |
| Strain at break | [%] | 340 | 360 | 350 | 380 |
| Tensile modulus | [MPa] | 1774 | 1517 | 1665 | 1666 |
| Charpy notched at 23°C | [kJ/m$^2$] | 12.9 | 20.5 | 13.7 | 62 |
| Charpy notched at -20°C | [kJ/m$^2$] | 5.3 | 6.1 | 6.1 | 5.1 |

**Table 3:** Properties of the heterophasic polypropylene composition (HECO)

| | | E 1A | E 1B | E 2A | E 2B | E3A | E 3B | CE 1A | CE 1B |
|---|---|---|---|---|---|---|---|---|---|
| Talc | [wt.-%] | 16.0 | 26.1 | 16.0 | 25.8 | 16.0 | 22.0 | 16.0 | 26.2 |
| FC-XS | - | 6.1 | 16.2 | 4.6 | 14.4 | 6.2 | 12.2 | 5.5 | 15.7 |
| $MFR_2$ | [g/10 min] | 0.72 | 1.28 | 0.50 | 1.05 | 1.14 | 1.23 | 1.09 | 1.3 |
| TM | [MPa] | 2440 | 3034 | 2466 | 2926 | 2467 | 2749 | 2179 | 2909 |
| $\Delta$ TM | [MPa] | 656 | 1260 | 949 | 1409 | 802 | 984 | 513 | 1243 |
| CN at RT | [kJ/m$^2$] | 6.8 | 4.1 | 10.2 | 4.7 | 5.7 | 4.4 | 6.9 | 4.5 |
| CN at -20 C | [kJ/m$^2$] | 3.2 | 2.2 | 3.7 | 2.3 | 3.0 | 2.6 | 3.1 | 2.2 |

FC-XS is the difference of the filler content [wt.-%] und xylene cold soluble (XCS) content of the heterophasic polypropylene composition (HECO)

TM Tensile modulus

CN Charpy notched impact strength

$\Delta$ TM Is the difference of the measured tensile modulus of the heterophasic polypropylene (HECO) without filler and with filler

Talc is the commercial product Mistron 75-6 A of Luzenac having a particle size d95 of 26.6 $\mu$m and a particle size d50 of 8.2 $\mu$m, both measured by laser diffraction (Malvern Mastersizer) according to ISO 13320-1:1999, and a specific surface according to BET measurement of 8.0 m$^2$/g.

**Claims**

1. Heterophasic polypropylene composition (HECO) comprising

(a) a matrix (M) being a polypropylene (PP),
(b) an elastomeric propylene copolymer (EC), and
(c) a mineral filler (F),

wherein

(i) said heterophasic polypropylene composition (HECO) has a melt flow rate $MFR_2$ (230 °C) measured according to ISO 1133 of equal or below 2.0 g/10min,
(ii) said heterophasic polypropylene composition (HECO) has a polydispersity index (PI) of at least 5.0,
(iii) the amount of the amorphous fraction (AM) of the xylene cold soluble (XCS) fraction of the heterophasic polypropylene composition (HECO) is at least 5.0 wt.-%, and
(iv) the amount of mineral filler (F) within said heterophasic polypropylene composition (HECO) is in the range of 5.0 to equal or below 30.0 wt.-%.

2. Heterophasic polypropylene composition (HECO) according to claim 1, wherein the heterophasic polypropylene composition (HECO) has

(i) a shear thinning index SHI (3/100) measured according to ISO 6271-10 (200 °C) of at least 20.0,
and/or
(ii) a comonomer content in the amorphous phase (AM) of the xylene cold soluble fraction (XCS) of below 40.0 wt.-%,
and/or
(iii) a xylene cold soluble (XCS) fraction measured according to ISO6427 (23 °C) of below 15.0 wt.-%.

3. Heterophasic polypropylene composition (HECO) according to claim 1 or 2, wherein the amorphous phase (AM) of the xylene cold soluble fraction (XCS) of the polypropylene composition (HECO) has an intrinsic viscosity (IV) measured according to ISO 1628-1 (at 135 °C in decaline) of at least 3.5 dl/g.

4. Heterophasic polypropylene composition (HECO) according to any one of the preceding claims, wherein the polypropylene composition (HECO) without filler (F) has

(i) a melting temperature Tm of at least 160 °C,
and/or
(ii) a crystallization temperature Tc of at least 122 °C,
and/or
(iii) comonomer content of equal or below 8.0 wt.-%.

5. Heterophasic polypropylene composition (HECO) according to any one of the preceding claims, wherein the polypropylene composition (HECO)

(i) has a charpy notched impact strength measured according to ISO 179 (1eA; - 20 °C) of at least 3.0 kJ/$m^2$,
and/or
(ii) is featured by the equation (1)

$$TM > 2040 + 56 \, x \, (FC - XS) \qquad (1)$$

wherein

TM is the tensile modulus [MPa] of the heterophasic polypropylene composition (HECO) measured according to ISO 527-2,
FC is the filler (F) content [wt.-%] of the heterophasic polypropylene composition (HECO)
XS is the xylene cold soluble (XCS) content [wt.-%] measured according to ISO 6427 (23 °C) of the heterophasic polypropylene composition (HECO).

6. Heterophasic polypropylene composition (HECO) according to any one of the preceding claims, wherein the polypropylene (PP) has

(i) a melt flow rate $MFR_2$ (230 °C) measured according to ISO 1133 of equal or below 1.0 g/10min and/or
(ii) a comonomer content of not more than 1.0 wt.-%, and/or
(iii) a shear thinning index SHI (3/100) measured according to ISO 6271-10 (200 °C) of at least 20.0, and/or
(iv) a polydispersity index (PI) of at least 4.5, and/or
(v) a xylene cold soluble (XCS) fraction measured according to ISO6427 (23 °C) of equal or below 2.0 wt.-%.

7. Heterophasic polypropylene composition (HECO) according to any one of the preceding claims, wherein the polypropylene (PP) comprises at least three polypropylene fractions, the three polypropylene fractions differ from each other by the melt flow rate $MFR_2$ (230 °C) measured according to ISO 1133.

8. Heterophasic polypropylene composition (HECO) according to any one of the preceding claims, wherein the polypropylene (PP) comprises

(a) a first polypropylene fraction (PP1) being a first propylene homopolymer (H-PP1) or a first random propylene copolymer (R-PP1),
(b) a second polypropylene fraction (PP2) being a second propylene homopolymer (H-PP2) or a second random propylene copolymer (R-PP2),
(c) a third polypropylene fraction (PP3) being a third propylene homopolymer (H-PP3) or a third random propylene copolymer (R-PP3),

with the proviso that at least one of the three fractions PP1, PP2, and PP3 is a propylene homopolymer, preferably all three fractions PP1, PP2, and PP3 are propylene homopolymers.

9. Heterophasic polypropylene composition (HECO) according to claim 8, wherein

(i) the third polypropylene fraction (PP3) has the highest melt flow rate $MFR_2$ (230 °C) measured according to ISO 1133 of the three polypropylene fractions PP1, PP2 and PP3, and/or
(ii) the three polypropylene fractions PP1, PP2 and PP3 differ in the melt flow rate $MFR_2$ (230 °C) measured according to ISO 1133.

10. Heterophasic polypropylene composition (HECO) according to claim 8 or 9, wherein the first polypropylene (PP1) being preferably a first propylene homopolymer (H-PP1) has

(i) a melt flow rate $MFR_2$ (230 °C) measured according to ISO 1133 of not more than 0.1 g/10min, and/or
(ii) comonomer content is not more than 1.0 wt.-%, and/or
(iii) a xylene cold soluble (XCS) fraction measured according to ISO6427 (23 °C) of equal or below 3.5 wt.-%.

11. Heterophasic polypropylene composition (HECO) according to any one of the claims 8 to 10, wherein

(i) the second polypropylene (PP2) being preferably a second propylene homopolymer (H-PP2) has a melt flow rate $MFR_2$ (230 °C) measured according to ISO 1133 in the range of 0.005 to 2.0 g/10min, and/or
(ii) the third polypropylene (PP3) being preferably a third propylene homopolymer (H-PP3) has a melt flow rate $MFR_2$ (230 °C) measured according to ISO 1133 of at least 4.0 g/10min.

12. Heterophasic polypropylene composition (HECO) according to any one of the preceding claims 8 to 11, wherein

wherein the weight ratio between the first polypropylene (PP1) and the second polypropylene (PP2) is 82:18 to 25:75.

**13.** Heterophasic polypropylene composition (HECO) according to any one of the preceding claims, wherein the heterophasic polypropylene composition (HECO) comprises

(a) 85.0 to 92.0 wt.-% of the random propylene copolymer (R-PP)
(b) 5.0 to 15.0 wt.-% of the elastomeric copolymer (EC),

based on the total amount of the polypropylene (PP) and the elastomeric copolymer (EC).

**14.** Heterophasic polypropylene composition (HECO) according to any one of the preceding claims 8 to 13, wherein the random propylene copolymer (R-PP) comprises

(a) 15.0 to 35.0 wt.-% of the first polypropylene (PP1),
(b) 12.0 to 48.0 wt.-% of the second polypropylene (PP2), and
(c) 18.0 to 62.0 wt.-% of the third polypropylene (PP3),

based on the total amount of the first polypropylene (PP1), the second polypropylene (PP2), and the third polypropylene (PP3).

**15.** Process for the preparation of a heterophasic polypropylene composition (HECO) according to any one of the preceding claims in a sequential polymerization process, said heterophasic polypropylene composition (HECO) comprises a first polypropylene (PP1), a second polypropylene (PP2), a third polypropylene (PP3), wherein said process comprises the steps of

(a1) polymerizing propylene and optionally at least one ethylene and/or at least one $C_4$ to $C_{12}$ $\alpha$-olefin in a first reactor (R1) obtaining the first polypropylene (PP1), preferably said first polypropylene (PP1) is a first propylene homopolymer (H-PP1),
(b 1) transferring the first polypropylene (PP1) in a second reactor (R2),
(c1) polymerizing in the second reactor (R2) and in the presence of said first polypropylene (PP1) propylene and optionally at least one ethylene and/or a $C_4$ to $C_{12}$ $\alpha$-olefin obtaining thereby the second polypropylene (PP2), preferably said second polypropylene (PP2) is a second propylene homopolymer (H-PP2), the first polypropylene (PP1) being mixed with the second polypropylene (PP2),
(d1) transferring the mixture of step (c1) in a third reactor (R3),
(e1) polymerizing in the third reactor (R3) and in the presence of the mixture obtained in step (c1) propylene and optionally at least one ethylene and/or a $C_4$ to $C_{12}$ $\alpha$-olefin obtaining thereby a third polypropylene (PP3), preferably said third polypropylene (PP3) is a third propylene homopolymer (H-PP3), the first polypropylene (PP1), the second polypropylene (PP2) and the third polypropylene (PP3) form the polypropylene (PP),
(f1) transferring the the polypropylene (PP) in a fourth reactor (R4),
(g1) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EC), the polypropylene (PP) and the elastomeric propylene copolymer (EC) form the heterophasic propylene copolymer (HECO), and
(h1) subsequently mixing said heterophasic polypropylene with a filler (F) obtaining thereby the heterophasic polypropylene composition (HECO).
or
(a2) polymerizing propylene and optionally at least one ethylene and/or a C4 to C20 $\alpha$-olefin in a first reactor (R1) obtaining the second polypropylene (PP2), preferably said second polypropylene (PP2) is a second propylene homopolymer (H-PP2),
(b2) transferring the second polypropylene (PP2) in a second reactor (R2),
(c2) polymerizing in the second reactor (R2) and in the presence of said second polypropylene (PP2) propylene and optionally at least one ethylene and/or a $C_4$ to $C_{12}$ $\alpha$-olefin obtaining thereby the third polypropylene (PP3), preferably said third polypropylene (PP3) is a third propylene homopolymer (H-PP3), the second polypropylene (PP2) being mixed with the third polypropylene (PP3),
(d2) transferring the mixture of step (c2) in a third reactor (R3),
(e2) polymerizing in the third reactor (R3) and in the presence of the mixture obtained in step (c2) propylene and optionally at least one ethylene and/or a $C_4$ to $C_{12}$ $\alpha$-olefin obtaining thereby a first polypropylene (PP1), preferably said first polypropylene (PP1) is a first propylene homopolymer (H-PP1), the first polypropylene

(PP1), the second polypropylene (PP2) and the third polypropylene (PP3) form the polypropylene (PP),
(f2) transferring the the polypropylene (PP) in a fourth reactor (R4),
(g2) polymerizing in the fourth reactor (R4) and in the presence of the polypropylene (PP) propylene and at least one ethylene and/or a $C_4$ to $C_{12}$ $\alpha$-olefin obtaining thereby a elastomeric propylene copolymer (EC), the polypropylene (PP) and the elastomeric propylene copolymer (EC) form the heterophasic propylene copolymer (HECO), and
(h2) subsequently mixing said heterophasic polypropylene with a filler (F) obtaining thereby the heterophasic polypropylene composition (HECO),
or
(a3) polymerizing propylene and optionally at least one ethylene and/or at least one $C_4$ to $C_{12}$ $\alpha$-olefin in a first reactor (R1) obtaining the first polypropylene (PP1), preferably said first polypropylene (PP1) is a first propylene homopolymer (H-PP1),
(b3) transferring the first polypropylene (PP1) in a second reactor (R2),
(c3) polymerizing in the second reactor (R2) and in the presence of said first polypropylene (PP1) propylene and optionally at least one ethylene and/or a $C_4$ to $C_{12}$ $\alpha$-olefin obtaining thereby the third polypropylene (PP3), preferably said third polypropylene (PP3) is a third propylene homopolymer (H-PP3), the first polypropylene (PP1) being mixed with the third polypropylene (PP3),
(d3) transferring the mixture of step (c1) in a third reactor (R3),
(e3) polymerizing in the third reactor (R3) and in the presence of the mixture obtained in step (c1) propylene and optionally at least one ethylene and/or a $C_4$ to $C_{12}$ $\alpha$-olefin obtaining thereby a second polypropylene (PP2), preferably said second polypropylene (PP2) is a second propylene homopolymer (H-PP2), the first polypropylene (PP1), the second polypropylene (PP2) and the third polypropylene (PP3) form the polypropylene (PP),
(f3) transferring the polypropylene (PP) in a fourth reactor (R4),
(g3) polymerizing in the fourth reactor (R4) and in the presence of the polypropylene (PP) propylene and at least one ethylene and/or a $C_4$ to $C_{12}$ $\alpha$-olefin obtaining thereby an elastomeric propylene copolymer (EC), the polypropylene (PP) and the elastomeric propylene copolymer (EC) form the heterophasic propylene copolymer (HECO), and
(h3) subsequently mixing said heterophasic polypropylene with a filler (F) obtaining thereby the heterophasic polypropylene composition (HECO).

**16.** Use of a heterophasic polypropylene composition (HECO) according to any one of the preceding claims 1 to 14 in pipes

**17.** Pipes comprising a heterophasic polypropylene composition (HECO) according to any one of the preceding claims 1 to 14.

**Patentansprüche**

**1.** Heterophasische Polypropylen-Zusammensetzung (HECO), umfassend

(a) eine Matrix (M), die ein Polypropylen (PP) ist,
(b) ein elastomeres Propylen-Copolymer (EC), und
(c) einen Mineral-Füllstoff (F),

wobei

(i) die heterophasische Polypropylen-Zusammensetzung (HECO) eine Schmelze-Fließ-Rate $MFR_2$ (230°C), gemessen gemäß ISO 1133, von gleich oder unter 2,0 g/10 min aufweist,
(ii) die heterophasische Polypropylen-Zusammensetzung (HECO) einen Polydispersitäts-Index (PI) von mindestens 5,0 aufweist,
(iii) die Menge der amorphen Fraktion (AM) von der in kaltem Xylol löslichen Fraktion (XCS) der heterophasischen Polypropylen-Zusammensetzung (HECO) mindestens 5,0 Gew.-% ist, und
(iv) die Menge an Mineral-Füllstoff (F) in der heterophasischen Polypropylen-Zusammensetzung (HECO) in dem Bereich von 5,0 bis gleich oder unter 30,0 Gew.-% liegt.

**2.** Heterophasische Polypropylen-Zusammensetzung (HECO) nach Anspruch 1, wobei die heterophasische Polypropylen-Zusammensetzung (HECO) aufweist

(i) einen Struktur-Viskositäts-Index SHI (3/100), gemessen gemäß ISO 6271-10 (200°C), von mindestens 20,0, und/oder
(ii) einen Comonomer-Gehalt in der amorphen Phase (AM) von der in kaltem Xylol löslichen Fraktion (XCS) von unter 40,0 Gew.-%,
und/oder
(iii) eine in kaltem Xylol lösliche Fraktion (XCS), gemessen gemäß ISO 6427 (23°C), von unter 15,0 Gew.-%.

**3.** Heterophasische Polypropylen-Zusammensetzung (HECO) nach Anspruch 1 oder 2, wobei die amorphe Phase (AM) von der in kaltem Xylol löslichen Fraktion (XCS) der Polypropylen-Zusammensetzung (HECO) eine Grenz-Viskosität (IV), gemessen gemäß ISO 1628-1 (bei 135°C in Decalin), von mindestens 3,5 dl/g aufweist.

**4.** Heterophasische Polypropylen-Zusammensetzung (HECO) nach einem der vorangehenden Ansprüche, wobei die Polypropylen-Zusammensetzung (HECO) ohne Füllstoff (F) aufweist

(i) eine Schmelz-Temperatur Tm von mindestens 160°C, und/oder
(ii) eine Kristallisations-Temperatur Tc von mindestens 122°C,
und/oder
(iii) Comonomer-Gehalt von gleich oder unter 8,0 Gew.-%.

**5.** Heterophasische Polypropylen-Zusammensetzung (HECO) nach einem der vorangehenden Ansprüche, wobei die Polypropylen-Zusammensetzung (HECO)

(i) eine Kerb-Schlag-Zähigkeit nach Charpy, gemessen gemäß ISO 179 (1eA; - 20°C) von mindestens 3,0 kJ/$m^2$ aufweist,
und/oder
(ii) durch die Gleichung (1) gekennzeichnet ist

$$TM > 2040 + 56 \text{ x } (FC - XS) \quad (1)$$

worin

TM der Zug-Modul [MPa] der heterophasischen Polypropylen-Zusammensetzung (HECO), gemessen gemäß ISO 527-2, ist,
FC der Füllstoff-Gehalt (F) [Gew.-%] der heterophasischen Polypropylen-Zusammensetzung (HECO) ist,
XS der in kaltem Xylol lösliche Gehalt (XCS) [Gew.-%], gemessen gemäß ISO 6427 (23°C), der heterophasischen Polypropylen-Zusammensetzung (HECO) ist.

**6.** Heterophasische Polypropylen-Zusammensetzung (HECO) nach einem der vorangehenden Ansprüche, wobei das Polypropylen (PP) aufweist

(i) eine Schmelze-Fließ-Rate $MFR_2$ (230°C), gemessen gemäß ISO 1133, von gleich oder unter 1,0 g/10 min, und/oder
(ii) einen Comonomer-Gehalt von nicht mehr als 1,0 Gew.-%,
und/oder
(iii) einen Struktur-Viskositäts-Index SHI (3/100), gemessen gemäß ISO 6271-10 (200°C), von mindestens 20,0, und/oder
(iv) einen Polydispersitäts-Index (PI) von mindestens 4,5,
und/oder
(v) eine in kaltem Xylol lösliche Fraktion (XCS), gemessen gemäß ISO 6427 (23°C), von gleich oder unter 2,0 Gew.-%.

**7.** Heterophasische Polypropylen-Zusammensetzung (HECO) nach einem der vorangehenden Ansprüche, wobei das Polypropylen (PP) mindestens drei Polypropylen-Fraktionen umfasst, wobei sich die drei Polypropylen-Fraktionen voneinander durch die Schmelze-Fließ-Rate $MFR_2$ (230°C), gemessen gemäß ISO 1133, unterscheiden.

**8.** Heterophasische Polypropylen-Zusammensetzung (HECO) nach einem der vorangehenden Ansprüche, wobei das

Polypropylen (PP) umfasst

(a) eine erste Polypropylen-Fraktion (PP1), die ein erstes Propylen-Homopolymer (H-PP1) oder ein erstes statistisches Propylen-Copolymer (R-PP1) darstellt,
(b) eine zweite Polypropylen-Fraktion (PP2), die ein zweites Propylen-Homopolymer (H-PP2) oder ein zweites statistisches Propylen-Copolymer (R-PP2) darstellt,
(c) eine dritte Polypropylen-Fraktion (PP3), die ein drittes Propylen-Homopolymer (H-PP3) oder ein drittes statistisches Propylen-Copolymer (R-PP3) darstellt,

mit der Maßgabe, dass mindestens eine der drei Fraktionen PP1, PP2 und PP3 ein Propylen-Homopolymer darstellt, vorzugsweise alle drei Fraktionen PP1, PP2 und PP3 Propylen-Homopolymere darstellen.

**9.** Heterophasische Polypropylen-Zusammensetzung (HECO) nach Anspruch 8, wobei

(i) die dritte Polypropylen-Fraktion (PP3) die höchste Schmelze-Fließ-Rate $MFR_2$ (230°C), gemessen gemäß ISO 1133, von den drei Polypropylen-Fraktionen PP1, PP2 und PP3 aufweist,
und/oder
(ii) die drei Polypropylen-Fraktionen PP1, PP2 und PP3 sich in der Schmelze-Fließ-Rate $MFR_2$ (230°C), gemessen gemäß ISO 1133, unterscheiden.

**10.** Heterophasische Polypropylen-Zusammensetzung (HECO) nach Anspruch 8 oder 9, wobei das erste Polypropylen (PP1), das vorzugsweise ein erstes Propylen-Homopolymer (H-PP1) darstellt, aufweist

(i) eine Schmelze-Fließ-Rate $MFR_2$ (230°C), gemessen gemäß ISO 1133, von nicht mehr als 0,1 g/10 min,
und/oder
(ii) Comonomer-Gehalt nicht mehr als 1,0 Ges.-% ist,
und/oder
(iii) eine in kaltem Xylol lösliche Fraktion (XCS), gemessen gemäß ISO 6427 (23°C), von gleich oder unter 3,5 Gew.-%.

**11.** Heterophasische Polypropylen-Zusammensetzung (HECO) nach einem der Ansprüche 8 bis 10, wobei

(i) das zweite Polypropylen (PP2), das vorzugsweise ein zweites Propylen-Homopolymer (H-PP2) darstellt, eine Schmelze-Fließ-Rate $MFR_2$ (230°C), gemessen gemäß ISO 1133, in dem Bereich von 0,005 bis 2,0 g/10 min aufweist,
und/oder
(ii) das dritte Polypropylen (PP3), das vorzugsweise ein drittes Propylen-Homopolymer (H-PP3) darstellt, eine Schmelze-Fließ-Rate $MFR_2$ (230°C), gemessen gemäß ISO 1133, von mindestens 4,0 g/10 min aufweist.

**12.** Heterophasische Polypropylen-Zusammensetzung (HECO) nach einem der vorangehenden Ansprüche 8 bis 11, wobei das Gewichts-Verhältnis zwischen dem ersten Polypropylen (PP1) und dem zweiten Polypropylen (PP2) 82:18 bis 25:75 ist.

**13.** Heterophasische Polypropylen-Zusammensetzung (HECO) nach einem der vorangehenden Ansprüche, wobei die heterophasische Polypropylen-Zusammensetzung (HECO) umfasst

(a) 85,0 bis 92,0 Ges.-% von dem statistischen Propylen-Copolymer (R-PP)
(b) 5,0 bis 15,0 Gew.-% von dem elastomeren Copolymer (EC),

basierend auf der Gesamtmenge an dem Polypropylen (PP) und dem elastomeren Copolymer (EC).

**14.** Heterophasische Polypropylen-Zusammensetzung (HECO) nach einem der vorangehenden Ansprüche 8 bis 13, wobei das statistische Propylen-Copolymer (R-PP) umfasst

(a) 15,0 bis 35,0 Gew.-% von dem ersten Polypropylen (PP1),
(b) 12,0 bis 48,0 Gew.-% von dem zweiten Polypropylen (PP2), und
(c) 18,0 bis 62,0 Gew.-% von dem dritten Polypropylen (PP3),

basierend auf der Gesamtmenge an dem ersten Polypropylen (PP1), dem zweiten Polypropylen (PP2) und dem dritten Polypropylen (PP3).

**15.** Verfahren zur Herstellung von einer heterophasischen Polypropylen-Zusammensetzung (HECO) nach einem der vorangehenden Ansprüche in einem sequenziellen Polymerisations-Verfahren, wobei die heterophasische Polypropylen-Zusammensetzung (HECO) ein erstes Polypropylen (PP1), ein zweites Polypropylen (PP2), ein drittes Polypropylen (PP3) umfasst, wobei das Verfahren die Schritte umfasst von

(a1) Polymerisieren von Propylen und gegebenenfalls mindestens einem Ethylen und/oder mindestens einem $C_4$ bis $C_{12}$ $\alpha$-Olefin in einem ersten Reaktor (R1) unter Gewinnen des ersten Polypropylens (PP1), wobei vorzugsweise das erste Polypropylen (PP1) ein erstes Propylen-Homopolymer (H-PP1) darstellt,
(b1) Überführen des ersten Polypropylens (PP1) in einen zweiten Reaktor (R2),
(c1) Polymerisieren in dem zweiten Reaktor (R2) und in Gegenwart des ersten Polypropylens (PP1) von Propylen und gegebenenfalls mindestens einem Ethylen und/oder einem $C_4$ bis $C_{12}$ $\alpha$-Olefin unter dabei Gewinnen des zweiten Polypropylens (PP2), wobei vorzugsweise das zweite Polypropylen (PP2) ein zweites Propylen-Homopolymer (H-PP2) darstellt, wobei das erste Polypropylen (PP1) mit dem zweiten Polypropylen (PP2) gemischt wird,
(d1) Überführen des Gemisches von Schritt (c1) in einen dritten Reaktor (R3),
(e1) Polymerisieren in dem dritten Reaktor (R3) und in Gegenwart des in Schritt (c1) erhaltenen Gemisches von Propylen und gegebenenfalls mindestens einem Ethylen und/oder einem $C_4$ bis $C_{12}$ $\alpha$-Olefin unter dabei Gewinnen eines dritten Polypropylens (PP3), wobei vorzugsweise das dritte Polypropylen (PP3) ein drittes Propylen-Homopolymer (H-PP3) darstellt, wobei das erste Polypropylen (PP1), das zweite Polypropylen (PP2) und das dritte Polypropylen (PP3) das Polypropylen (PP) bilden,
(f1) Überführen des Polypropylens (PP) in einen vierten Reaktor (R4),
(g1) Polymerisieren in dem vierten Reaktor (R4) und in Gegenwart des Polypropylens (PP) von Propylen und mindestens einem Ethylen und/oder einem $C_4$ bis $C_{12}$ $\alpha$-Olefin unter dabei Gewinnen eines elastomeren Propylen-Copolymers (EC), wobei das Polypropylen (PP) und das elastomere Propylen-Copolymer (EC) das heterophasische Propylen-Copolymer (HECO) bilden, und
(h1) anschließend Mischen des heterophasischen Polypropylens mit einem Füllstoff (F) unter dabei Gewinnen der heterophasischen Polypropylen-Zusammensetzung (HECO),
oder
(a2) Polymerisieren von Propylen und gegebenenfalls mindestens einem Ethylen und/oder einem $C_4$ bis $C_{20}$ $\alpha$-Olefin in einem ersten Reaktor (R1) unter Gewinnen des zweiten Polypropylens (PP2), wobei vorzugsweise das zweite Polypropylen (PP2) ein zweites Propylen-Homopolymer (H-PP2) darstellt,
(b2) Überführen des zweiten Polypropylens (PP2) in einen zweiten Reaktor (R2),
(c2) Polymerisieren in dem zweiten Reaktor (R2) und in Gegenwart des zweiten Polypropylens (PP2) von Propylen und gegebenenfalls mindestens einem Ethylen und/oder einem $C_4$ bis $C_{12}$ $\alpha$-Olefin unter dabei Gewinnen des dritten Polypropylens (PP3), wobei vorzugsweise das dritte Polypropylen (PP3) ein drittes Propylen-Homopolymer (H-PP3) darstellt, wobei das zweite Polypropylen (PP2) mit dem dritten Polypropylen (PP3) vermischt wird,
(d2) Überführen des Gemisches von Schritt (c2) in einen dritten Reaktor (R3),
(e2) Polymerisieren in dem dritten Reaktor (R3) und in Gegenwart des in Schritt (c2) erhaltenen Gemisches von Propylen und gegebenenfalls mindestens einem Ethylen und/oder einem $C_4$ bis $C_{12}$ $\alpha$-Olefin unter dabei Gewinnen eines ersten Polypropylens (PP1), wobei vorzugsweise das erste Polypropylen (PP1) ein erstes Propylen-Homopolymer (H-PP1) darstellt, wobei das erste Polypropylen (PP1), das zweite Polypropylen (PP2) und das dritte Polypropylen (PP3) das Polypropylen (PP) bilden,
(f2) Überführen des Polypropylens (PP) in einen vierten Reaktor (R4),
(g2) Polymerisieren in dem vierten Reaktor (R4) und in Gegenwart des Polypropylens (PP) von Propylen und mindestens einem Ethylen und/oder einem $C_4$ bis $C_{12}$ $\alpha$-Olefin unter dabei Gewinnen eines elastomeren Propylen-Copolymers (EC), wobei das Polypropylen (PP) und das elastomere Propylen-Copolymer (EC) das heterophasische Propylen-Copolymer (HECO) bilden, und
(h2) anschließend Mischen des heterophasischen Polypropylens mit einem Füllstoff (F) unter dabei Gewinnen der heterophasischen Polypropylen-Zusammensetzung (HECO),
oder
(a3) Polymerisieren von Propylen und gegebenenfalls mindestens einem Ethylen und/oder mindestens einem $C_4$ bis $C_{12}$ $\alpha$-Olefin in einem ersten Reaktor (R1 ) unter Gewinnen des ersten Polypropylens (PP1), wobei vorzugsweise das erste Polypropylen (PP1) ein erstes Propylen-Homopolymer (H-PP1) darstellt,
(b3) Überführen des ersten Polypropylens (PP1) in einen zweiten Reaktor (R2),

(c3) Polymerisieren in dem zweiten Reaktor (R2) und in Gegenwart des ersten Polypropylens (PP1) von Propylen und gegebenenfalls mindestens einem Ethylen und/oder einem $C_4$ bis $C_{12}$ $\alpha$-Olefin unter dabei Gewinnen des dritten Polypropylens (PP3), wobei vorzugsweise das dritte Polypropylen (PP3) ein drittes Propylen-Homopolymer (H-PP3) darstellt, wobei das erste Polypropylen (PP1) mit dem dritten Polypropylen (PP3) vermischt wird,
(d3) Überführen des Gemisches von Schritt (c1) in einen dritten Reaktor (R3),
(e3) Polymerisieren in dem dritten Reaktor (R3) und in Gegenwart des in Schritt (c1) erhaltenen Gemisches von Propylen und gegebenenfalls mindestens einem Ethylen und/oder einem $C_4$ bis $C_{12}$ $\alpha$-Olefin unter dabei Gewinnen eines zweiten Polypropylens (PP2), wobei vorzugsweise das zweite Polypropylen (PP2) ein zweites Propylen-Homopolymer (H-PP2) darstellt, wobei das erste Polypropylen (PP1), das zweite Polypropylen (PP2) und das dritte Polypropylen (PP3) das Polypropylen (PP) bilden,
(f3) Überführen des Polypropylens (PP) in einen vierten Reaktor (R4),
(g3) Polymerisieren in dem vierten Reaktor (R4) und in Gegenwart des Polypropylens (PP) von Propylen und mindestens einem Ethylen und/oder einem $C_4$ bis $C_{12}$ $\alpha$-Olefin unter dabei Gewinnen eines elastomeren Propylen-Copolymers (EC), wobei das Polypropylen (PP) und das elastomere Propylen-Copolymer (EC) das heterophasische Propylen-Copolymer (HECO) bilden, und
(h3) anschließend Mischen des heterophasischen Polypropylens mit einem Füllstoff (F) unter dabei Gewinnen der heterophasischen Polypropylen-Zusammensetzung (HECO).

**16.** Verwendung einer heterophasischen Polypropylen-Zusammensetzung (HECO) nach einem der vorangehenden Ansprüche 1 bis 14 in Rohren.

**17.** Rohre, umfassend eine heterophasische Polypropylen-Zusammensetzung (HECO) nach einem der vorangehenden Ansprüche 1 bis 14.

## Revendications

**1.** Composition de polypropylène hétérophasique (HECO) comprenant

(a) une matrice (M) qui est un polypropylène (PP),
(b) un copolymère de propylène élastomère (EC), et
(c) une charge minérale (F),

dans laquelle

(i) ladite composition de polypropylène hétérophasique (HECO) présente un indice de fluage $MFR_2$ (230°C), mesuré conformément à la norme ISO 1133, égal ou inférieur à 2,0 g/10 min,
(ii) ladite composition de polypropylène hétérophasique (HECO) présente un indice de polydispersité (PI) d'au moins 5,0,
(iii)la quantité de la fraction amorphe (AM) de la fraction soluble dans le xylène froid (XCS) de la composition de polypropylène hétérophasique (HECO) est d'au moins 5,0 % en poids, et
(iv) la quantité de charge minérale (F) dans ladite composition de polypropylène hétérophasique (HECO) est située dans la plage allant de 5,0 à 30,0 % en poids ou moins.

**2.** Composition de polypropylène hétérophasique (HECO) selon la revendication 1, laquelle composition de polypropylène hétérophasique (HECO) présente

(i) un indice de fluidification par cisaillement SHI (3/100), mesuré conformément à la norme ISO 6271-10 (200°C), d'au moins 20,0,
et/ou
(ii) une teneur en comonomères dans la phase amorphe (AM) de la fraction soluble dans le xylène froid (XCS) inférieure à 40,0 % en poids,
et/ou
(iii) une fraction soluble dans le xylène froid (XCS), mesurée conformément à la norme ISO 6427 (23°C), inférieure à 15,0 % en poids.

**3.** Composition de polypropylène hétérophasique (HECO) selon la revendication 1 ou 2, dans laquelle la phase amorphe (AM) de la fraction soluble dans le xylène froid (XCS) de la composition de polypropylène (HECO) présente une

viscosité intrinsèque (IV), mesurée conformément à la norme ISO 1628-1 (à 135°C dans la décaline), d'au moins 3,5 dl/g.

**4.** Composition de polypropylène hétérophasique (HECO) selon l'une quelconque des revendications précédentes, laquelle composition de polypropylène (HECO) sans la charge (F) présente

(i) un point de fusion Tm d'au moins 160°C,
et/ou
(ii) un point de cristallisation Tc d'au moins 122°C, et/ou
(iii)une teneur en comonomères égale ou inférieure à 8,0 % en poids.

**5.** Composition de polypropylène hétérophasique (HECO) selon l'une quelconque des revendications précédentes, laquelle composition de polypropylène (HECO)

(i) présente une résistance au choc Charpy sur barreau entaillé, mesurée conformément à la norme ISO 179 (1eA ;-20°C) d'au moins 3,0 kJ/$m^2$,
et/ou
(ii) est **caractérisée par** l'équation (1)

$$TM > 2040 + 56 \times (FC - XS) \qquad (1)$$

dans laquelle

TM est le module en traction [MPa] de la composition de polypropylène hétérophasique (HECO), 1 mesuré conformément à la norme ISO 527-2,
FC est la teneur en charge (F) [% en poids] de la composition de polypropylène hétérophasique (HECO),
XS est la teneur en composés solubles dans le xylène froid (XCS) [% en poids], mesurée conformément à la norme ISO 6427 (23°C), de la composition de polypropylène hétérophasique (HECO).

**6.** Composition de polypropylène hétérophasique (HECO) selon l'une quelconque des revendications précédentes, dans laquelle le polypropylène (PP) présente

(i) un indice de fluage $MFR_2$ (230°C), mesuré conformément à la norme ISO 1133, égal ou inférieur à 1,0 g/10 min, et/ou
(ii) une teneur en comonomères ne dépassant pas 1,0 % en poids,
et/ou
(iii)un indice de fluidification par cisaillement SHI (3/100), mesuré conformément à la norme ISO 6271-10 (200°C), d'au moins 20,0,
et/ou
(iv) un indice de polydispersité (PI) d'au moins 4,5, et/ou
(v) une fraction soluble dans le xylène froid (XCS), mesurée conformément à la norme ISO 6427 (23°C), égale ou inférieure à 2,0 % en poids.

**7.** Composition de polypropylène hétérophasique (HECO) selon l'une quelconque des revendications précédentes, dans laquelle le polypropylène (PP) comprend au moins trois fractions de polypropylène, les trois fractions de polypropylène différant les unes des autres par l'indice de fluage $MFR_2$ (230°C), mesuré conformément à la norme ISO 1133.

**8.** Composition de polypropylène hétérophasique (HECO) selon l'une quelconque des revendications précédentes, dans laquelle le polypropylène (PP) comprend

(a) une première fraction de polypropylène (PP1) qui est un premier homopolymère de propylène (H-PP1) ou un premier copolymère de propylène statistique (R-PP1),
(b) une deuxième fraction de polypropylène (PP2) qui est un deuxième homopolymère de propylène (H-PP2) ou un deuxième copolymère de propylène statistique (R-PP2),
(c) une troisième fraction de polypropylène (PP3) qui est un troisième homopolymère de propylène (H-PP3) ou

un troisième copolymère de propylène statistique (R-PP3), sous réserve qu'au moins l'une des trois fractions PP1, PP2 et PP3 soit un homopolymère de propylène, et de préférence que toutes les trois fractions PP1, PP2 et PP3 soient des homopolymères de propylène.

**9.** Composition de polypropylène hétérophasique (HECO) selon la revendication 8, dans laquelle

(i) la troisième fraction de polypropylène (PP3) a l'indice de fluage $MFR_2$ (230°C), mesuré conformément à la norme ISO 1133, le plus élevé parmi les trois fractions de polypropylène PP1, PP2 et PP3,
et/ou
(ii) les trois fractions de polypropylène PP1, PP2 et PP3 diffèrent par l'indice de fluage $MFR_2$ (230°C), mesuré conformément à la norme ISO 1133.

**10.** Composition de polypropylène hétérophasique (HECO) selon la revendication 8 ou 9, dans laquelle le premier polypropylène (PP1), qui est de préférence un premier homopolymère de propylène (H-PP1), présente

(i) un indice de fluage $MFR_2$ (230°C), mesuré conformément à la norme ISO 1133, ne dépassant pas 0,1 g/10 min,
et/ou
(ii) une teneur en comonomères ne dépassant pas 1,0 % en poids,
et/ou
(iii)une fraction soluble dans le xylène froid (XCS), mesurée conformément à la norme ISO 6427 (23°C), égale ou inférieure à 3,5 % en poids.

**11.** Composition de polypropylène hétérophasique (HECO) selon l'une quelconque des revendications 8 à 10, dans laquelle

(i) le deuxième polypropylène (PP2), qui est de préférence un deuxième homopolymère de propylène (H-PP2), présente un indice de fluage $MFR_2$ (230°C), mesuré conformément à la norme ISO 1133, situé dans la plage allant de 0,005 à 2,0 g/10 min,
et/ou
(ii) le troisième polypropylène (PP3), qui est de préférence un troisième homopolymère de propylène (H-PP3), présente un indice de fluage $MFR_2$ (230°C), mesuré conformément à la norme ISO 1133, d'au moins 4,0 g/10 min.

**12.** Composition de polypropylène hétérophasique (HECO) selon l'une quelconque des revendications 8 à 11, dans laquelle le rapport en poids entre le premier polypropylène (PP1) et le deuxième polypropylène (PP2) est de 82/18 à 25/75.

**13.** Composition de polypropylène hétérophasique (HECO) selon l'une quelconque des revendications précédentes, laquelle composition de polypropylène hétérophasique (HECO) comprend

(a) 85,0 à 92,0 % en poids du copolymère de propylène statistique (R-PP),
(b) 5,0 à 15,0 % en poids du copolymère élastomère (EC), sur la base de la quantité totale du polypropylène (PP) et du copolymère élastomère (EC).

**14.** Composition de polypropylène hétérophasique (HECO) selon l'une quelconque des revendications 8 à 13, dans laquelle le copolymère de propylène statistique (R-PP) comprend

(a) 15,0 à 35,0 % en poids du premier polypropylène (PP1),
(b) 12,0 à 48,0 % en poids du deuxième polypropylène (PP2), et
(c) 18,0 à 62,0 % en poids du troisième polypropylène (PP3),

sur la base de la quantité totale du premier polypropylène (PP1), du deuxième polypropylène (PP2) et du troisième polypropylène (PP3).

**15.** Procédé pour la préparation d'une composition de polypropylène hétérophasique (HECO) selon l'une quelconque des revendications précédentes dans un procédé de polymérisation en séquence, ladite composition de polypropylène hétérophasique (HECO) comprenant un premier polypropylène (PP1), un deuxième polypropylène (PP2) et un troisième polypropylène (PP3), lequel procédé comprend les étapes consistant à

(a1) polymériser du propylène et éventuellement au moins l'un parmi l'éthylène et/ou au moins une $\alpha$-oléfine en $C_4$ à $C_{12}$ dans un premier réacteur (R1), ce qui donne le premier polypropylène (PP1), ledit premier polypropylène (PP1) étant de préférence un premier homopolymère de propylène (H-PP1),

(b1) transférer le premier polypropylène (PP1) dans un deuxième réacteur (R2),

(c1) polymériser, dans le deuxième réacteur (R2) et en présence dudit premier polypropylène (PP1), du propylène et éventuellement au moins l'un parmi l'éthylène et/ou une $\alpha$-oléfine en $C_4$ à $C_{12}$, ce qui donne ainsi le deuxième polypropylène (PP2), ledit deuxième polypropylène (PP2) étant de préférence un deuxième homopolymère de propylène (H-PP2), le premier polypropylène (PP1) étant mélangé avec le deuxième polypropylène (PP2),

(d1) transférer le mélange de l'étape (c1) dans un troisième réacteur (R3),

(e1) polymériser, dans le troisième réacteur (R3) et en présence du mélange obtenu dans l'étape (c1), du propylène et éventuellement au moins l'un parmi l'éthylène et/ou une $\alpha$-oléfine en $C_4$ à $C_{12}$, ce qui donne ainsi un troisième polypropylène (PP3), ledit troisième polypropylène (PP3) étant de préférence un troisième homopolymère de propylène (H-PP3), le premier polypropylène (PP1), le deuxième polypropylène (PP2) et le troisième polypropylène (PP3) formant le polypropylène (PP),

(f1) transférer le polypropylène (PP) dans un quatrième réacteur (R4),

(g1) polymériser, dans le quatrième réacteur (R4) et en présence du polypropylène (PP), du propylène et au moins l'un parmi l'éthylène et/ou une $\alpha$-oléfine en $C_4$ à $C_{12}$, ce qui donne ainsi un copolymère de propylène élastomère (EC), le polypropylène (PP) et le copolymère de propylène élastomère (EC) formant le copolymère de propylène hétérophasique (HECO), et

(h1) ensuite mélanger ledit polypropylène hétérophasique avec une charge (F), ce qui donne ainsi la composition de polypropylène hétérophasique (HECO),

ou

(a2) polymériser du propylène et éventuellement au moins l'un parmi l'éthylène et/ou une $\alpha$-oléfine en $C_4$ à $C_{20}$ dans un premier réacteur (R1), ce qui donne le deuxième polypropylène (PP2), ledit deuxième polypropylène (PP2) étant de préférence un deuxième homopolymère de propylène (H-PP2),

(b2) transférer le deuxième polypropylène (PP2) dans un deuxième réacteur (R2),

(c2) polymériser, dans le deuxième réacteur (R2) et en présence dudit deuxième polypropylène (PP2), du propylène et éventuellement au moins l'un parmi l'éthylène et/ou une $\alpha$-oléfine en $C_4$ à $C_{12}$, ce qui donne ainsi le troisième polypropylène (PP3), ledit troisième polypropylène (PP3) étant de préférence un troisième homopolymère de propylène (H-PP3), le deuxième polypropylène (PP2) étant mélangé avec le troisième polypropylène (PP3),

(d2) transférer le mélange de l'étape (c2) dans un troisième réacteur (R3),

(e2) polymériser, dans le troisième réacteur (R3) et en présence du mélange obtenu dans l'étape (c2), du propylène et éventuellement au moins l'un parmi l'éthylène et/ou une $\alpha$-oléfine en $C_4$ à $C_{12}$, ce qui donne ainsi un premier polypropylène (PP1), ledit premier polypropylène (PP1) étant de préférence un premier homopolymère de propylène (H-PP1), le premier polypropylène (PP1), le deuxième polypropylène (PP2) et le troisième polypropylène (PP3) formant le polypropylène (PP),

(f2) transférer le polypropylène (PP) dans un quatrième réacteur (R4),

(g2) polymériser, dans le quatrième réacteur (R4) et en présence du polypropylène (PP), du propylène et éventuellement au moins l'un parmi l'éthylène et/ou une $\alpha$-oléfine en $C_4$ à $C_{12}$, ce qui donne ainsi un copolymère de propylène élastomère (EC), le polypropylène (PP) et le copolymère de propylène élastomère (EC) formant le copolymère de propylène hétérophasique (HECO), et

(h2) ensuite mélanger ledit polypropylène hétérophasique avec une charge (F), ce qui donne ainsi la composition de polypropylène hétérophasique (HECO),

ou

(a3) polymériser du propylène et éventuellement au moins l'un parmi l'éthylène et/ou au moins une $\alpha$-oléfine en $C_4$ à $C_{12}$ dans un premier réacteur (R1), ce qui donne le premier polypropylène (PP1), ledit premier polypropylène (PP1) étant de préférence un premier homopolymère de propylène (H-PP1),

(b3) transférer le premier polypropylène (PP1) dans un deuxième réacteur (R2),

(c3) polymériser, dans le deuxième réacteur (R2) et en présence dudit premier polypropylène (PP1), du propylène et éventuellement au moins l'un parmi l'éthylène et/ou une $\alpha$-oléfine en $C_4$ à $C_{12}$, ce qui donne ainsi le troisième polypropylène (PP3), ledit troisième polypropylène (PP3) étant de préférence un troisième homopolymère de propylène (H-PP3), le premier polypropylène (PP1) étant mélangé avec le troisième polypropylène (PP3),

(d3) transférer le mélange de l'étape (c3) dans un troisième réacteur (R3),

(e3) polymériser, dans le troisième réacteur (R3) et en présence du mélange obtenu dans l'étape (c1), du propylène et éventuellement au moins l'un parmi l'éthylène et/ou une $\alpha$-oléfine en $C_4$ à $C_{12}$, ce qui donne ainsi

un deuxième polypropylène (PP2), ledit deuxième polypropylène (PP2) étant de préférence un deuxième homopolymère de propylène (H-PP2), le premier polypropylène (PP1), le deuxième polypropylène (PP2) et le troisième polypropylène (PP3) formant le polypropylène (PP),
(f3) transférer le polypropylène (PP) dans un quatrième réacteur (R4),
(g3) polymériser, dans le quatrième réacteur (R4) et en présence du polypropylène (PP), du propylène et éventuellement au moins l'un parmi l'éthylène et/ou une $\alpha$-oléfine en $C_4$ à $C_{12}$, ce qui donne ainsi un copolymère de propylène élastomère (EC), le polypropylène (PP) et le copolymère de propylène élastomère (EC) formant le copolymère de propylène hétérophasique (HECO), et
(h3) ensuite mélanger ledit polypropylène hétérophasique avec une charge (F), ce qui donne ainsi la composition de polypropylène hétérophasique (HECO).

**16.** Utilisation d'une composition de polypropylène hétérophasique (HECO) selon l'une quelconque des revendications 1 à 14 dans des tuyaux.

**17.** Tuyaux comprenant une composition de polypropylène hétérophasique (HECO) selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0887379 A
- WO 9212182 A
- WO 2004000899 A
- WO 2004111095 A
- WO 9924478 A
- WO 9924479 A
- WO 0068315 A
- WO 8707620 A
- WO 9219653 A
- WO 9219658 A
- EP 0491566 A

### Non-patent literature cited in the description

- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- *Thermochimica Acta,* 1990, vol. 66, 53-68
- **HEINO, E.L. ; LEHTINEN, A ; TANNER, J. ; SEPPÄLÄ, J. NESTE OY ; PORVOO, FINLAND.** *Theor. Appl. Rheol., Proc. Int. Congr. Rheol.,* 1992, vol. 1, 360-362
- **HEINO, EEVA-LEENA ; BOREALIS POLYMERS OY ; PORVOO, FINLAND.** *Annual Transactions of the Nordic Rheolooy Society,* 1995